(19) Europäisches Patentamt
European Patent Office
Office européen des brevets

(11) Publication number: **0 314 396 B1**

(12) # EUROPEAN PATENT SPECIFICATION

(45) Date of publication of patent specification: **16.02.94**

(51) Int. Cl.5: **C08L 23/16**, C08K 3/36, C08K 5/54, C08K 9/06, C08L 83/04, //(C08L23/16,83:04, C08K3:36,5:54),(C08L23/16, 83:04,C08K9:06)

(21) Application number: **88309880.8**

(22) Date of filing: **20.10.88**

(54) **Heat-resistant rubber composition.**

(30) Priority: **20.10.87 JP 262583/87**
**20.10.87 JP 262584/87**
**20.10.87 JP 262585/87**
**20.10.87 JP 262586/87**

(43) Date of publication of application:
**03.05.89 Bulletin 89/18**

(45) Publication of the grant of the patent:
**16.02.94 Bulletin 94/07**

(84) Designated Contracting States:
**AT BE CH DE ES FR GB GR IT LI LU NL SE**

(56) References cited:
**EP-A- 0 236 674**
**GB-A- 2 019 417**
**US-A- 4 436 847**

(73) Proprietor: **MITSUI PETROCHEMICAL INDUSTRIES, LTD.**
**2-5, Kasumigaseki 3-chome**
**Chiyoda-ku**
**Tokyo 100(JP)**

(72) Inventor: **Tojo, Tetsuo**
**5, Yushudai Nishi 2-chome**
**Ichihara-shi Chiba-ken(JP)**
Inventor: **Okamoto, Katsuo**
**1582-2, 3-chome**
**Hazama-cho**
**Funabashi-shi Chiba-ken(JP)**
Inventor: **Matsuda, Akira**
**872-4, Saihiro**
**Ichihara-shi Chiba-ken(JP)**
Inventor: **Louis, Eckhart**
**8-3, Minami-Yukigaya 4-chome**
**Ohta-ku**
**Tokyo(JP)**

(74) Representative: **Cresswell, Thomas Anthony et al**
**J.A. Kemp & Co.**
**14 South Square**
**Gray's Inn**
**London WC1R 5EU (GB)**

EP 0 314 396 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a heat-resistant rubber composition. More particularly, the present invention relates to a rubber composition comprising a modified or unmodified ethylene/α-olefin copolymer rubber and a specific silane-treated silica type filler or a combination of a silane-treated or untreated silica type filler and a specific polyorganosiloxane, which gives a cured rubber excellent in mechanical properties, resistance to heat aging and electric properties.

An ethylene/α-olefin copolymer rubber is widely used as a rubber having excellent mechanical properties and electrically insulating properties for car parts, electric parts, ordinary industrial parts. Recently, a high resistance against heat aging is often required for car parts and electric parts.

Accordingly, as is shown in Complete Book of Synthetic Rubber Processing Techniques, "Ethylene-Propylene Rubber", addition of antioxidants to rubbers of this type has been tried, but no satisfactory improvement effect can be attained.

A composition comprising an ethylene/α-olefin copolymer and a silica type filler has been used in various fields where a rubber is ordinarily used. It is known that if a silica type filler is surface-treated with trimethylchlorosilane, a hydrophobic property can be imparted, and this silane-treated silica type filler is incorporated in an ethylene/α-olefin copolymer.

A composition of this type is excellent in the initial physical properties, but the aging resistance is still insufficient.

It has already been known that reinforcing silica and an organopolysiloxane are incorporated in an ethylene/α-olefin copolymer such as EPR. For example, Japanese Patent Application Laid-Open Specification No. 116739/81 and Japanese Patent Application Laid Open Specification No. 120744/81 teach that organochlorosilane-treated silica and an organopolysiloxane such as dimethylpolysiloxane are incorporated in EPR, and Japanese Patent Application Laid-Open Specification No. 195757/82 teaches that finely divided silica and an organopolysiloxane are incorporated in EPR.

We found that if a silica type filler which has been treated with a trialkoxysilane having an alkenyl group, a chloroalkenyl group or a chloroalkyl group is incorporated in an ethylene/α-olefin copolymer rubber or a combination of this silane-treated silica type filler or an untreated silica type filler and an organopolysiloxane having a chloroalkyl group is incorporated in an ethylene/α-olefin copolymer rubber, the heat aging resistance of the rubber is highly improved.

It is therefore a primary object of the present invention to improve the heat aging resistance of an ethylene/α-olefin copolymer rubber without degradation of excellent mechanical properties and electrically insulating properties.

Another object of the present invention is to provide a rubber composition which gives a cured rubber showing high strength and elongation retention ratios even under heat aging conditions.

More specifically, in accordance with the present invention, there is provided a heat-resistant rubber composition comprising (A) 100 parts by weight of an ethylene/α-olefin copolymer or a modified ethylene/α-olefin copolymer formed by graft-copolymerization with at least one compound selected from the group consisting of unsaturated carboxylic acids and anhydrides and esters thereof, and (B) (i) 10 to 100 parts by weight of a silica type filler which has been treated with a silane compound represented by the following formula:

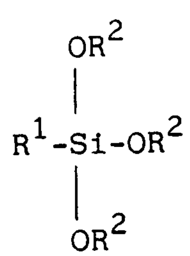

(I)

wherein $R^1$ stands for a chloroalkenyl group or a chloroalkyl group, and $R^2$ stands for a lower alkyl group,

or (ii) a combination of 10 to 100 parts by weight of said silane-treated silica type filler or an untreated silica type filler and 0.5 to 30 parts by weight of a polyorganosiloxane having an average composition represented by the following formula:

$(R^3)_a(R^4)_bSiO_{(4-a-b)/2}$ (II)

wherein $R^3$ stands for a monovalent saturated or unsaturated hydrocarbon group, $R^4$ stands for a chloroalkyl group or an alkenyl group, a is a number of from 1 to 2.5 and b is a number of from 0.01 to 1.2, with the proviso that the sum of a and b is in the range of from 1.8 to 3.

In the present invention, by incorporating a silica type filler treated with a specific silane coupling agent represented by the formula (I) into an ethylene/α-olefin copolymer rubber, the heat aging resistance of the rubber is prominently improved.

More specifically, as is apparent from the examples given hereinafter, in the composition of the present invention, the strength and elongation retention ratios after the test conducted at 180°C for 96 hours are at least 68%, generally at least 70%, preferably at 87%. Ordinarily, the heat resistance is carried out at 140°C, and if the retention ratio is at least 70% at this test, it is judged that the composition is heat-resistant. The superiority of the composition of the present invention will be readily understood from this fact.

The reason why the heat aging resistance is prominently improved in the present invention has not been completely elucidated. However, it is considered that this effect may probably be due to a prominent improvement of the interface between the filler and the ethylene/α-olefin copolymer rubber.

The above-mentioned effect of the present invention can be similarly attained when a combination of a silane-modified or unmodified silica type filler and an organopolysiloxane represented by the formula (II) is incorporated.

(A) Ethylene/α-Olefin Copolymer Rubber

The ethylene/α-olefin copolymer rubber used as the base polymer in the composition of the present invention is a copolymer of ethylene with at least one member selected from α-olefins having 3 to 10 carbon atoms, such as propylene, 1-butene, 1-pentene, 1-hexene, 4-methyl-1-pentene, 1-octene and 1-decene. The ethylene content is generally 50 to 95 mole% and preferably 60 to 92 mole%.

The ethylene/α-olefin copolymer rubber may further comprise at least one polyene component.

As specific examples of the polyene component, there can be mentioned linear unconjugated dienes such as 1,4-hexadiene, 1,6-octadiene, 2-methyl-1,5-hexadiene, 6-methyl-1,5-heptadiene and 7-methyl-1,6-octadiene, cyclic unconjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene and 6-chloromethyl-5-isopropenyl-2-norbornene, and trienes such as 2,3-diisopropylidene-5-norbornene, 2-ethylidene-3-isopropylidene-5-norbornene, 2-propenyl-2,2-norbornadiene, 1,3,7-octatriene and 1,4,9-decatriene. Cyclic unconjugated dienes and 1,4-hexadiene are preferred, and dicyclopentadiene and 5-ethylidene-2-norbornene are especially preferred. The polyene component is copolymerized in such an amount that the iodine value of the formed copolymer is up to 30, preferably up to 20.

A copolymer having an intrinsic viscosity [$\eta$] of 0.5 to 4.0 dℓ/g, especially 1.0 to 3.5 dℓ/g, as measured at 135°C in decalin is preferably used.

If the intrinsic viscosity [$\eta$] is too small and below the above-mentioned range, the obtained rubber composition is insufficient in the mechanical properties, and if the intrinsic viscosity [$\eta$] exceeds the above-mentioned range, the processability is often degraded.

The ethylene/α-olefin copolymer rubber may be one graft-copolymerized with an unsaturated carboxylic acid or a derivative (for example, an anhydride or ester) thereof. If this modified ethylene/α-olefin copolymer rubber is used, the tensile strength of the final cured rubber can be further improved over the tensile strength attained when the unmodified rubber is used. Moreover, the tensile strength and elongation retention ratios under heat aging conditions can be further improved.

The following compounds can be mentioned as examples of the unsaturated carboxylic acid and its anhydride and ester to be graft-copolymerized to the ethylene/α-olefin copolymer rubber, though compounds that can be used in the present invention are not limited to the compounds described below.

Unsaturated Carboxylic Acids

Acrylic acid, methacrylic acid, maleic acid, fumaric acid, itaconic acid, citraconic acid, tetrahydrophthalic acid and bicyclo(2,2,1)-hepto-2-ene-5,6-dicarboxylic acid.

Unsaturated Carboxylic Anhydrides

Maleic anhydride, itaconic anhydride, citraconic anhydride, tetrahydrophthalic anhydride and bicyclo-(2,2,1)-hepto-2-ene-5,6-dicarboxylic anhydride.

Among them, maleic anhydride is especially preferred.

Unsaturated Carboxylic Acid Esters

Methyl acrylate, methyl methacrylate, dimethyl maleate, monomethyl maleate, diethyl fumarate, dimethyl itaconate, diethyl citraconate, dimethyl tetrahydrophthalate and dimethyl bicyclo(2,2,2)hepto-2-ene-5,6-dicarboxylate.

Among them, methyl acrylate and ethyl acrylate are preferred.

These unsaturated carboxylic acids and derivatives are used singly or in the form of mixtures of two or more of them as the grafting comonomer. At any rate, it is preferred that the unsaturated carboxylic acid or derivative be graft-copolymerized in an amount of 0.1 to 10 parts by weight, especially 0.2 to 5 parts by weight, per 100 parts by weight of the ethylene/$\alpha$-olefin copolymer rubber.

If the amount of the grafted comonomer is too small and below the above-mentioned range, the intended further improvement of the strength or the heat aging-resistance is hardly attained. If the amount of the grafted comonomer exceeds the above-mentioned range, the obtained rubber composition tends to be insufficient in the processability or the cold resistance.

The graft copolymerization is accomplished by reacting the ethylene/$\alpha$-olefin copolymer rubber with the unsaturated carboxylic acid or its derivative in the presence of a radical initiator.

The reaction can be carried out in the state of a solution or in the molten state. If the reaction is carried out in the molten state, a highest efficiency can be attained by performing the reaction in a continuous manner in an extruder.

A radical initiator having such a property that the decomposition temperature giving a half-value period of 1 minute is 150 to 270°C is preferably used for the grafting reaction.

As typical instances, there can be mentioned organic peroxides and organic peresters such as benzoyl peroxide, dichlorobenzoyl peroxide, dicumyl peroxide, di-tert-butyl peroxide, 2,5-dimethyl-2,5-di-(peroxybenzoate)hexine-3,1,4-bis(tert-butylperoxyisopropyl)benzene, lauroyl peroxide, tert-butyl peracetate, 2,5-dimethyl-2,5-di(tert-butylperoxy)hexine-3,2,5-dimethyl-2,5-di(tert-butylperoxy)hexane, tert-butyl perbenzoate, tert-butylperphenyl acetate, tert-butyl per-sec-octoate, tert-butyl perpivalate, cumyl perpivalate and tert-butyl perdiethylacetate.

In view of the mechanical properties and processability, a modified or unmodified ethylene/$\alpha$-olefin copolymer rubber having a Mooney viscosity [$ML_{1+4}$ (100°C)] of 5 to 180, especially 10 to 120, is preferred.

(B) Silane-Treated Silica Type Filler

A silane compound represented by the following formula:

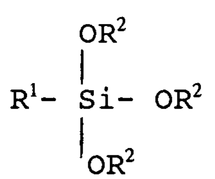

(I)

wherein $R^1$ stands for a chloroalkenyl group or a chloroalkyl group, preferably a chloropropyl group, and $R^2$ stands for a lower alkyl group, for example, a methyl group or an ethyl group, is used as the silane coupling agent for the silane treatment of the silica type filler. As specific examples, there can be mentioned chloropropyltrimethoxysilane and chloropropyltriethoxysilane.

All of known silica type fillers can be used as the filler to be silane-treated. For example, dry method silica, wet method silica, synthetic silicate type white carbon, talc and clay are preferably used. Among these silica type fillers, dry method silica having a BET specific area of 50 to 400 $m^2/g$, especially 100 to 300 $m^2/g$, is especially preferred for attaining the objects of the present invention. Among various silica type fillers, dry method silica has a relatively low silanol group content, and if this silica is treated with the above-mentioned silane, the silanol group is blocked and it is considered that the silica is effectively bonded to the

rubber through the functional group of the silane.

The treatment amount of the silane coupling agent represented by the above-mentioned formula (I) is 0.1 to 5% by weight, preferably 0.5 to 4% by weight, especially preferably 1 to 3% by weight, as the carbon content based on the treated filler.

If the treatment amount of the silane coupling agent is too small, the desired heat aging resistance cannot be attained, and use of too large an amount of the silane coupling agent results in economical disadvantages.

If the silane-treated silica type filler is used, the heat aging resistance is prominently improved, and furthermore, since the bulk specific gravity of the filler is increased, kneading of the ethylene/$\alpha$-olefin copolymer rubber with the filler can be performed smoothly. Accordingly, the silane treatment is industrially significant.

The silane coupling agent treatment is performed by known means.

For example, there can be mentioned a method in which the silica type filler and the silica compound are continuously supplied in parallel and are reacted in a treatment chamber comprising a vertical tubular furnace, as disclosed in Japanese Patent Publication No. 17049/66, and a method in which the silica type filler is contacted with the silica compound at a relatively low temperature, a high-temperature treatment is then carried out and a drying treatment with an inert gas is further carried out, as disclosed in Japanese Patent Publication No. 6379/85.

The carbon content of the silane-treated silica type filler is measured according to the following procedures.

More specifically, the silane-treated silica type filler is sufficiently dried in a current of nitrogen gas maintained at 150 °C and the carbon content is then measured by an elementary analysis meter.

It should be understood that in the special embodiment of the present invention where the chloroalkyl group-containing polyorganosiloxane is used, the untreated silica type filler can also be used.

(C) Polyorganosiloxane

In the present invention, a polyorganosiloxane having an average composition represented by the following formula (II) is used as the organopolysiloxane:

$$(R^3)_a(R^4)_bSiO_{(4-a-b)/2} \qquad (II)$$

wherein $R^3$ stands for a monovalent hydrocarbon group, especially a lower alkyl group or a phenyl group, $R^4$ stands for a chloroalkyl group or an alkenyl group, a is a number of from 1 to 2.5 and b is a number of from 0.01 to 1.2, especially from 0.05 to 1.0, with the proviso that the sum of a and b is in the range of from 1.8 to 3.

A polyorganosiloxane of the formula (I) in which $R^1$ is a methyl group or a phenyl group is preferably used. Furthermore, a chloroalkyl group having 3 to 8 carbon atoms, such as a $\gamma$-chloropropyl group or a $\delta$-chloropropylgroup, or an alkenyl group having 2 to 8 carbon atoms, such as a vinyl group or an allyl group, is preferred as $R^2$ in the formula (II).

The number average molecular weight (Mn) of the polyorganosiloxane is $10^2$ to $10^6$, preferably $10^3$ to $10^5$, most preferably $5 \times 10^3$ to $5 \times 10^4$.

If the polymerization degree exceeds the above-mentioned range, the polyorganosiloxane is not sufficiently compatible with the ethylene/$\alpha$-olefin copolymer rubber, and hence, reduction of the strength is caused. If the polymerization degree is below the above-mentioned range, the desired heat aging resistance is hardly obtained.

(D) Recipe

In the rubber composition according to one embodiment of the present invention, 10 to 100 parts by weight, preferably 15 to 80 parts by weight, especially preferably 20 to 60 parts by weight, of at least one silica type filler (B) treated with a specific silane coupling agent as mentioned above is incorporated in 100 parts by weight of the modified or unmodified ethylene/$\alpha$-olefin copolymer rubber (A).

If the amount incorporated of the silane-treated silica type filler is below or beyond the above-mentioned range, the mechanical properties, such as the tensile strength and the elongation, of the cured rubber become insufficient, and the heat aging resistance is not satisfactory.

In the rubber composition according to another embodiment of the present invention, 0.5 to 30 parts by weight, preferably 1 to 25 parts by weight, especially preferably 1.5 to 20 parts by weight, of a specific

polyorganosiloxane (C) as mentioned above is incorporated in 100 parts by weight of the modified or unmodified ethylene/α-olefin copolymer (A), and 10 to 100 parts by weight, preferably 15 to 80 parts by weight, especially preferably 20 to 60 parts by weight, of a silica type filler (B) treated with a specific silane coupling agent as mentioned above or an untreated silica type filler is further incorporated.

If the amount of the polyorganosiloxane (C) is too small and below the above-mentioned range, the desired heat aging resistance cannot be obtained, and if the amount of the polyorganosiloxane (C) is too large and exceeds the above-mentioned range, the desired strength cannot be obtained and the composition becomes expensive. Accordingly, use of the polyorganosiloxane (C) in too small an amount or too large an amount is not practically preferred. Furthermore, if the amount of the silica type filler (B) treated with the silane coupling agent is too small or too large, the desired strength is not obtained, and use of the silane-treated silica type filler (B) in too small an amount or too large an amount is not practically preferred.

Preferred combinations of the respective components are described in detail in the examples given hereinafter.

Known additives such as rubber reinforcers, softeners, curing agents and curing assistants can be incorporated in the rubber composition of the present invention according to the intended use of the cured product.

In the present invention, it is preferred that the total amount of the above-mentioned components (A) through (C) be at least 60% by weight, especially at least 80% by weight, based on the whole composition, though the total amount is changed according to the intended use.

As the rubber reinforcer, there can be mentioned carbon blacks such as SRF, GPF, FEF, ISAF, SAF, FT and MT.

The amount of the rubber reinforcer is appropriately decided according to the intended use, but it is preferred that the amount of the rubber reinforcer be up to 50 parts by weight, especially up to 30 parts by weight, per 100 parts by weight of the total amount of the components (A) through (C).

A softener customarily used for ordinary rubbers is satisfactorily used as the softener in the present invention. For example, there can be mentioned petroleum type softeners such as process oil, lubricating oil, synthetic lubricating oil, paraffin, liquid paraffin, petroleum asphalt and vaseline, coal tar type softeners such as coal tar and coal tar pitch, fat oil type softeners such as castor oil, linseed oil, rape oil and coconut oil, waxes such as bees wax, carnauba wax and lanoline, tall oil, factice, fatty acids and fatty acid salts such as ricinoleic acid, palmitic acid, barium stearate, calcium stearate and zinc laurate, synthetic polymeric substances such as petroleum resin, atactic polypropylene, coumarone-indene resin and polyester resin, ester type plasticizers such as dioctyl adipate and dioctyl phthalate, and microcrystalline wax and rubber substitute (factice).

The amount incorporated of the softener is appropriately decided according to the intended use but it is preferred that the amount of the softener be up to 50 parts by weight, especially up to 30 parts by weight, per 100 parts by weight of the total amount of the above-mentioned components (A) through (C).

The cured product from the composition of the present invention can be prepared by forming an uncured rubber compound according to the method described below, molding the rubber compound into a desired shape and curing the rubber compound, as in case of curing of ordinary rubbers. Curing can be accomplished by a method using a curing agent and a method comprising irradiation with electron beams.

Sulfur compounds and organic peroxides can be used as the curing agent. As the sulfur compound, there can be mentioned sulfur, sulfur chloride, sulfur dichloride, morpholine disulfide, alkylphenol disulfide, tetramethylthiuram disulfide and selenium dimethylthiocarbamate. Use of sulfur is especially preferred. The sulfur compound is used in an amount of 0.1 to 10 parts by weight, 0.5 to 5 parts by weight, per 100 parts by weight of the modified or unmodified ethylene/α-olefin copolymer rubber (A). As the organic peroxide, there can be mentioned dicumyl peroxide, 2,5-dimethyl-2,5-di(tert-butylperoxy)hexane, 2,5-dimethyl-2,5-di-(benzoylperoxy)hexane, 2,5-dimethyl-2,5-di(tert-butylperoxy)hexine-3,5-di-tert-butyl peroxide, di-tert-butyl-peroxy-3,3,5-trimethylcyclohexane and tert-butyl hydroperoxide. Among them, dicumyl peroxide, di-tert-butyl peroxide and di-tert-butylperoxy-3,3,5-trimethylcyclohexane are preferably used. The organic peroxide is used in an amount of $3 \times 10^{-4}$ to $5 \times 10^{-2}$ molar part, preferably $1 \times 10^{-3}$ to $3 \times 10^{-2}$ molar part, per 100 parts by weight of the ethylene/α-olefin copolymer rubber (A).

When a sulfur compound is used as the curing agent, it is preferred that a curing promoter be used in combination. As the curing promoter, there can be mentioned thiazole type curing promoters such as N-cyclohexyl-2-benzothiazole-sulfenamide, N-oxydiethylene-2-benzothiazole-sulfenamide, N,N-diisopropyl-2-benzothiazole-sulfenamide, 2-mercaptobenzothiazole, 2-(2,4-dinitrophenyl)mercaptobenzothiazole, 2-(2,6-diethyl-4-morpholinothio)benzothiazole and dibenzothiazyldisulfide, guanidine type promoters such as diphenylguanidine, triphenylguanidine, di-o-tolylguanidine, o-tolyl biguanide, and diphenylguanidine phthalate, aldehyde-amine or aldehyde-ammonia type promoters such as acetaldehyde/aniline reaction

product, butylaldehyde/aniline condensate, hexamethylene tetraamine and acetaldehyde ammonia, imidazoline type promoters such as 2-mercaptoimidazoline, thiourea type promoters such as thiocarbanilide, diethylthiourea, dibutylthiourea, trimethylthiourea and di-o-tolylthiourea, thiuram type promoters such as tetramethylthiuram monosulfide, tetramethylthiuram disulfide, tetraethylthiuram disulfide, tetrabutylthiuram disulfide and pentamethylenethiuram tetrasulfide, dithioacid salt type promoters such as zinc dimethyldithiocarbamate, zinc diethylthiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate and tellurium diethyldithiocarbamate, xanthate typepromoters such as zinc dibutylxanthate, and other promoters such as zinc flower. The curing promoter is used in an amount of 0.1 to 20 parts by weight, preferably 0.2 to 10 parts by weight, per 100 parts by weight of the ethylene/α-olefin copolymer rubber.

When an organic peroxide is used as the curing agent, it is preferred that a curing assistant be used in combination. As the curing assistant, there can be mentioned sulfur, quinone dioxime type assistants such as p-quinone dioxime, methacrylate type assistants such as polyethylene glycol dimethacrylate, allyl type assistants such as diallyl phthalate and triallyl cyanurate, maleimide type assistants, and other assistants such as divinylbenzene. The curing assistant is used in an amount of 0.5 to 2 moles, preferably about 1 mole, per mole of the organic peroxide.

In the case where electron beams are used for curing instead of curing agents, electron beams having an energy of 0.1 to 10 MeV (megaelectron volts), preferably 0.3 to 2.0 MeV, are applied to a shaped uncured rubber compound described below so that the quantity of absorbed beams is 0.5 to 35 Mrad (megarads), preferably 0.5 to 10 Mrad. In this case, the above-mentioned curing assistant to be used in combination with the organic peroxide as the curing agent can be used. The amount of the curing assistant is $1 \times 10^{-4}$ to $1 \times 10^{-1}$ molar part, preferably $1 \times 10^{-3}$ to $3 \times 10^{-2}$ molar part, per 100 parts by weight of the ethylene/α-olefin copolymer rubber (A). Furthermore, a colorant, an antioxidant, a dispersant and a flame retardant can be incorporated into the composition of the present invention according to need.

(E) Preparation of Rubber Composition

An uncured rubber compound of the composition of the present invention is prepared according to the following method.

More specifically, the ethylene/α-olefin copolymer rubber (A), the silica type filler (B) treated with the silane coupling agent, optionally with the polyorganosiloxane (C), and if necessary, the rubber reinforcer and the softener are kneaded at a temperature of 80 to 170 °C for 3 to 10 minutes by using a mixer such as a Banbury mixer. The curing agent and if necessary, the curing promoter or the curing assistant are further added by using a roll such as an open roll, the mixture is kneaded at a roll temperature of 40 to 80 °C for 5 to 30 minutes, and the kneaded mixture is recovered dividely and formed into a ribbon- or sheet-shaped rubber compound.

The so-prepared rubber compound is molded into an intended shape by an extrusion molding machine, a calender roll or a press. Simultaneously with or after the molding operation, the rubber compound is introduced into a curing tank and heated at 150 to 270 °C for 1 to 30 minutes or the rubber compound is irradiated with electron beams according to the above-mentioned method, whereby a cured product is obtained. This curing can be used by or without using a mold. In the case where a mold is not used, the molding and curing operations are ordinarily conducted in a continuous manner.

In the case where curing is effected by irradiation with electron beams, a rubber compound free of a curing agent is used.

Heating in the curing tank can be effected by hot air, a glass bead fluidized bed, UHF (ultra-high frequency electromagnetic wave) and steam.

As shown in the examples given hereinafter, the so-prepared rubber composition of the present invention is excellent in mechanical properties, electrically insulating property and heat aging resistance, and is advantageously used for the production of a wire cover, a tube, a belt, a rubber roll, a gasket, a packing and a rubber hose.

The present invention will now be described in detail with reference to the following examples.

<u>Example 1</u>

A rubber composition was prepared by using the following ethylene/α-olefin copolymer rubber (A) and silane-treated silica type filler (B) according to the following recipe.

Ethylene/α-olefin copolymer rubber

ethylene content: 68 mole%
α-olefin: propylene
[η] : 1.8
iodine value: 5 (ethylidene-norbornene)

Silane-treated silica (B)

silica: dry method silica having specific surface area of 200 $m^2/g$
silane coupling agent: chloropropyltrimethoxysilane
treatment amount (carbon content): 2.0% by weight

Recipe
ethylene/α-olefin copolymer rubber: 100.0 parts by weight
silane-treated silica: 30.0 parts by weight
stearic acid: 2.0 parts by weight
zinc flower: 5.0 parts by weight
organic peroxide[1)]: 5.0 parts by weight
sulfur: 0.2 part by weight
antioxidant MB[2)]: 2.0 parts by weight
antioxidant 200[3)]: 1.0 part by weight

Kneading was carried out at 60 to 70 °C for 20 minutes by an 20,3 cm (8-inch) open roll. Then, the mixture was press-cured at 170 °C for 10 minutes to form a cured sheet having a thickness of 2 mm, and the sheet was used for the measurement.

The following properties were measured according to the method of JIS K-6301.

Normal state physical properties

tensile strength (TB) and elongation (EB)
Heat aging resistance (heat aging conditions: 180 °C x 96 hours)
tensile strength retention ratio AR(TB) and elongation retention ratio AR(EB)
The obtained results are shown in Table 1.

## Example 2

The procedures of Example 1 were repeated in the same manner except that the following ethylene/α-olefin copolymer rubber was used.
ethylene content: 80 mole%
α-olefin: propylene
[η] : 1.5

## Example 3

The procedures of Example 1 were repeated in the same manner except that the following ethylene/α-olefin copolymer rubber was used.
ethylene content: 80 mole%
α-olefin: propylene
[η]: 1.5

Note
1) Mitsui DCP 40C supplied by Mitsui Petrochemical

2) 2-mercaptobenzimidazole supplied by Ouchi Shinko

3) 2,6-di-tert-butyl-4-methylphenol supplied by Ouchi Shinko

iodine value 3 (vinylnorbornene)

Example 4

The procedures of Example 1 were repeated in the same manner except that the following ethylene/α-olefin copolymer rubber was used.

ethylene content: 90 mole%

α-olefin: 1-butene

[η] : 1.3

Comparative Example 1

The procedures of Example 1 were repeated in the same manner except that the untreated silica was used instead of the silane-treated silica.

Example 5

The procedure of Example 1 were repeated in the same manner except that the following silane-treated silica was used.

silica: dry method silica having specific surface area of 200 $m^2/g$

silane coupling agent: vinyltrimethoxysilane

treatment amount (carbon content): 2.5% by weight

Example 6

The procedures of Example 1 were repeated in the same manner except that the following silane-treated silica was used.

silica: dry method silica having specific surface area of 200 $m^2/g$

silane coupling agent: allyltrimethoxysilane

treatment amount (carbon content): 3.0% by weight

Example 7

The procedures of Example 1 were repeated in the same manner except that the treatment amount of the silane-treated silica was changed to a carbon content of 0.5% by weight.

Example 8

The procedures of Example 1 were repeated in the same manner except that the treatment amount of the silane-treated silica was changed to a carbon content of 3.5% by weight.

Example 9

The procedures of Example 2 were repeated in the same manner except that a modified ethylene/α-olefin copolymer rubber obtained by modifying the ethylene/α-olefin copolymer rubber used in Example 2 with maleic anhydride was used.

maleic anhydride content: $5 \times 10^{-3}$ mole per 100 g of copolymer rubber

Example 10

The procedures of Example 9 were repeated in the same manner except that the following silane-treated silica was used.

silica: dry method silica having specific surface area of 200 $m^2/g$

silane coupling agent: vinyltrimethoxysilane

treatment amount (carbon content): 2.5% by weight

Example 11

The procedures of Example 9 were repeated in the same manner except that the following silane-treated silica was used.

silica: dry method silica having specific surface area of 200 $m^2/g$
silane coupling agent: allyltrimethoxysilane
treatment amount (carbon content): 3.0% by weight

Example 12

The procedures of Example 4 were repeated in the same manner except that a modified ethylene/α-olefin copolymer rubber obtained by modifying the ethylene/α-olefin copolymer rubber was used in Example 4 with ethyl acrylate was used.

ethyl acrylate content: $10^{-2}$ mole% per 100 g of copolymer rubber

Example 13

The procedures of Example 1 were repeated in the same manner except that the following ethylene/α-olefin copolymer rubber was used and the recipe was changed as indicated below.

Ethylene/α-olefin copolymer rubber

ethylene content: 70 mole%
α-olefin: propylene
[$\eta$] : 2.7
iodine value: 10 (ethylidene-norbornene)

Recipe

ethylene/α-olefin copolymer: 100.0 parts by weight
silane-treated silica: 30.0 parts by weight
stearic acid: 2.0 parts by weight
zinc flower: 5.0 parts by weight
promoter DPTT[1)]: 0.5 part by weight
promoter ZnBDC[2)]: 1.5 parts by weight
promoter: MBTS[3)]: 3.0 parts by weight
sulfur: 1.5 parts by weight
antioxidant AANP[4)]: 1.0 part by weight

Example 14

The procedures of Example 1 were repeated in the same manner except that the recipe was changed as indicated below.

Note
1) dipentamethylene-thiuram tetrasulfide supplied by Ouchi Shinko

2) zinc di-n-butyldithiocarbamate supplied by Ouchi Shinko

3) dibenzothiazyl disulfide supplied by Ouchi Shinko

4) powdery condensate of aldol and 1-naphthylamine supplied by Ouchi Shinko

Recipe

ethylene/α-olefin copolymer rubber: 100.0 parts by weight
silane-treated silica: 15.0 parts by weight
stearic acid: 2.0 parts by weight
zinc flower: 5.0 parts by weight
organic peroxide[1)]: 5.0 parts by weight
sulfur: 0.2 part by weight
antioxidant MB[2)]: 2.0 parts by weight
antioxidant 200[3)]: 1.0 part by weight

Example 15

The procedures of Example 1 were repeated in the same manner except that the recipe was changed as indicated below.

Recipe

ethylene/α-olefin copolymer rubber: 100.0 parts by weight
silane-treated silica: 50.0 parts by weight
stearic acid: 2.0 parts by weight
synthetic lubricating oil[1)]: 20.0 parts by weight
zinc flower: 5.0 parts by weight
organic peroxide: 5.0 parts by weight
sulfur: 0.2 part by weight
antioxidant MB: 2.0 parts by weight
antioxidant 200: 1.0 part by weight

Example 16

The procedures of Example 1 were repeated in the same manner except that the following silane-treated silica was used.

Silane-treated silica

silica: Nipsil $VH_3$ (supplied by Nippon Silica)
silane coupling agent: chloropropyltrimethoxysilane
treatment amount (carbon content): 2.5% by weight

Comparative Example 2

The procedures of Example 16 were repeated in the same manner except that the recipe was changed as indicated below.

Recipe

ethylene/α-olefin copolymer rubber: 100.0 parts by weight
silane-treated silica: 5.0 parts by weight
stearic acid: 2.0 parts by weight
zinc flower: 5.0 parts by weight
organic peroxide: 5.0 parts by weight
sulfur: 0.2 part by weight
antioxidant MB: 2.0 parts by weight
antioxidant 200: 1.0 parts by weight

Note
1) Lucant®HC-600 supplied Mitsui Petrochemical

Comparative Example 3

The procedures of Example 16 were repeated in the same manner except that the recipe was changed as indicated below.

Recipe

ethylene/α-olefin copolymer rubber: 100.0 parts by weight
silane-treated silica: 110.0 parts by weight
stearic acid: 2.0 parts by weight
synthetic lubricating oil[1)]: 60.0 parts by weight
zinc flower: 5.0 parts by weight
organic peroxide: 5.0 parts by weight
sulfur: 0.2 part by weight
antioxidant MB: 2.0 parts by weight
antioxidant 200: 1.0 part by weight

Note
1) Lucant®HC-600 supplied by Mitsui Petrochemical

The results obtained in the foregoing examples are shown in Table 1.

Table 1

| | Ex.1 | Ex.2 | Ex.3 | Ex.4 | Comp. Ex.1 | Ex.5 | Ex.6 |
|---|---|---|---|---|---|---|---|
| Composition | | | | | | | |
| ethylene/α-olefin copolymer rubber | | | | | | | |
| I.(η):1.8,α-olefin:$C_3$,$C_2$content:68mole% IV:5(ENB) | 100 | | | | 100 | 100 | 100 |
| II.(η):1.5,α-olefin:$C_3$,$C_2$content:80mole% | | 100 | | | | | |
| III.(η):3.0,α-olefin:$C_3$,$C_2$content:80mole% IV:3(VNB) | | | 100 | | | | |
| IV.(η):1.3,α-olefin:$C_4$,$C_2$content:90mole% | | | | 100 | | | |
| V.(η):2.7,α-olefin:$C_3$,$C_2$content:70mole% IV:10(ENB) | | | | | | | |
| MAH-11 | | | | | | | |
| ethyl acrylate-IV - | | | | | | | |
| silica type filler | | | | | | | |
| chloropropyltrimethoxysilane-treated dry method silica (C content:2.0wt.%) | 30 | 30 | 30 | 30 | | | |
| chloropropyltrimethoxysilane-treated dry method silica (C content:0.5wt.%) | | | | | | | |
| chloropropyltrimethoxysilane-treated dry method silica (C content:3.5wt.%) | | | | | | | |
| vinyltrimethoxysilane-treated dry method silica (C content:2.5wt.%) | | | | | | 30 | |
| allyltrimethoxysilane-treated dry method silica (C content:3.0wt.%) | | | | | | | 30 |
| chloropropyltrimethoxysilane-treated wet method silica (C content:2.0wt.%) | | | | | | | |
| untreated dry method silica | | | | | 30 | | |
| Properties of Cured Rubber | | | | | | | |
| normal state | | | | | | | |
| tensile strength TB (kg/$cm^2$) | 185 | 211 | 230 | 241 | 121 | 161 | 180 |
| elongation EB ( % ) | 590 | 660 | 610 | 650 | 490 | 510 | 600 |
| heat aging resistance (180°C x 96 hours) | | | | | | | |
| tensile strength retention ratio AR (TB) ( % ) | 71 | 74 | 73 | 78 | <10 | 65 | 73 |
| elongation retention ratio AR (EB) ( % ) | 76 | 75 | 76 | 80 | <10 | 72 | 75 |

Note: Ex.: Example Comp.Ex.: Comparative Example

Table 1 (continued)

| | Ex.7 | Ex.8 | Ex.9 | Ex.10 | Ex.11 | Ex.12 |
|---|---|---|---|---|---|---|
| **Composition** | | | | | | |
| ethylene/α-olefin copolymer rubber | | | | | | |
| I.(η):1.8,α-olefin:$C_3$,$C_2$content:68mole% IV:5(ENB) | 100 | 100 | | | | |
| II.(η):1.5,α-olefin:$C_3$,$C_2$content:80mole% | | | | | | |
| III.(η):3.0,α-olefin:$C_3$,$C_2$content:80mole% IV:3(VNB) | | | | | | |
| IV.(η):1.3,α-olefin:$C_4$,$C_2$content:90mole% | | | | | | |
| V.(η):2.7,α-olefin:$C_3$,$C_2$content:70mole% IV:10(ENB) | | | | | | |
| MAH-II | | | 100 | 100 | 100 | |
| ethyl acrylate-IV | | | | | | 100 |
| silica type filler | | | | | | |
| chloropropyltrimethoxysilane-treated dry method silica (C content:2.0wt.%) | | | 30 | | | 30 |
| chloropropyltrimethoxysilane-treated dry method silica (C content:0.5wt.%) | 30 | | | | | |
| chloropropyltrimethoxysilane-treated dry method silica (C content:3.5wt.%) | | 30 | | | | |
| vinyltrimethoxysilane-treated dry method silica (C content:2.5wt.%) | | | | 30 | | |
| allyltrimethoxysilane-treated dry method silica (C content:3.0wt.%) | | | | | 30 | |
| chloropropyltrimethoxysilane-treated wet method silica (C content:2.0wt.%) | | | | | | |
| untreated dry method silica | | | | | | |
| **Properties of Cured Rubber** | | | | | | |
| normal state | | | | | | |
| tensile strength TB (kg/$cm^2$) | 179 | 191 | 260 | 225 | 231 | 230 |
| elongation EB ( % ) | 570 | 610 | 640 | 540 | 610 | 590 |
| heat aging resistance (180°C x 96 hours) | | | | | | |
| tensile strength retention ratio AR (TB) ( % ) | 68 | 78 | 81 | 78 | 83 | 79 |
| elongation retention ratio AR (EB) ( % ) | 77 | 76 | 86 | 80 | 79 | 83 |

Note: Ex.: Example Comp.Ex.: Comparative Example

Table 1 (continued)

| | Ex.13 | Ex.14 | Ex.15 | Ex.16 | Comp. Ex. 2 | Comp. Ex. 3 |
|---|---|---|---|---|---|---|
| **Composition** | | | | | | |
| ethylene/α-olefin copolymer rubber | | | | | | |
| I.(η):1.8,α-olefin:$C_3$,$C_2$content:68mole% IV:5(ENB) | | 100 | 100 | 100 | 100 | 100 |
| II.(η):1.5,α-olefin:$C_3$,$C_2$content:80mole% | | | | | | |
| III.(η):3.0,α-olefin:$C_3$,$C_2$content:80mole% IV:3(VNB) | | | | | | |
| IV.(η):1.3,α-olefin:$C_4$,$C_2$content:90mole% | | | | | | |
| V.(η):2.7,α-olefin:$C_3$,$C_2$content:70mole% IV:10(ENB) | 100 | | | | | |
| MAH-II | | | | | | |
| ethyl acrylate-IV | | | | | | |
| silica type filler | | | | | | |
| chloropropyltrimethoxysilane-treated dry method silica (C content:2.0wt.%) | 30 | 15 | 50 | | 5 | |
| chloropropyltrimethoxysilane-treated dry method silica (C content:0.5wt.%) | | | | | | |
| chloropropyltrimethoxysilane-treated dry method silica (C content:3.5wt.%) | | | | | | |
| vinyltrimethoxysilane-treated dry method silica (C content:2.5wt.%) | | | | | | |
| allyltrimethoxysilane-treated dry method silica (C content:3.0wt.%) | | | | | | |
| chloropropyltrimethoxysilane-treated wet method silica (C content:2.0wt.%) | | | | 30 | | 110 |
| untreated dry method silica | | | | | | |
| **Properties of Cured Rubber** | | | | | | |
| normal state | | | | | | |
| tensile strength TB ($kg/cm^2$) | 171 | 171 | 200 | 176 | 68 | 51 |
| elongation EB ( % ) | 480 | 510 | 680 | 670 | 580 | 310 |
| heat aging resistance (180°C x 96 hours) | | | | | | |
| tensile strength retention ratio AR (TB) ( % ) | 89 | 73 | 75 | 62 | - | - |
| elongation retention ratio AR (EB) ( % ) | 70 | 76 | 71 | 70 | - | - |

Note: Ex.: Example Comp.Ex.: Comparative Example

## Example 17

A rubber composition was prepared by using the following indispensable components (A) through (C) according to the following recipe.

Ethylene/α-olefin copolymer rubber (A)

ethylene content: 68 mole%
α-olefin: propylene
[η]: 1.8
iodine value: 5 (ethylidene-norbornene)

Silane-treated silica (B)

silica: dry method silica having specific surface area of 200 $m^2/g$
silane coupling agent: chloropropyltrimethoxysilane
treatment amount (carbon content): 2.0% by weight

Polyorganosiloxane (C)

chemical formula: $(CH_3)_{1.6}(C\ell CH_2CH_2CH_2)_{0.2}SiO$
number average molecular weight: $5.0 \times 10^3$

Recipe

ethylene/α-olefin copolymer rubber: 100.0 parts by weight
polyorganosiloxane: 3.0 parts by weight
silane-treated silica: 30.0 parts by weight
stearic acid: 2.0 parts by weight
zinc flower: 5.0 parts by weight
organic peroxide[1)]: 5.0 parts by weight
sulfur: 0.2 part by weight
antioxidant MB[2)]: 2.0 parts by weight
antioxidant 200[3)]: 1 part by weight

Kneading was carried out at 60 to 70°C for 20 minutes by an 20,3 cm (8-inch) open roll. Then, the mixture was press-cured at 170°C for 10 minutes to form a cured sheet having a thickness of 2 mm, and the sheet was used for the measurement.

The following properties were measured according to the method of JIS K-6301.

Normal state physical properties

tensile strength (TB) and elongation (EB)

Heat aging resistance (heat aging conditions: 180°C x 96 hours)

tensile strength retention ratio AR(TB) and elongation retention ratio AR(EB)
The obtained results are shown in Table 2.

Example 18

The procedures of Example 17 were repeated in the same manner except that the following ethylene/α-olefin copolymer rubber was used.
ethylene content: 80 mole%
α-olefin: propylene
[η] : 1.5

Note
1) Mitsui DCP 40C supplied by Mitsui Petrochemical

2) 2-mercaptobenzimidazole supplied by Ouchi Shinko

3) 2,6-di-tert-butyl-4-methylphenol supplied by Ouchi Shinko

Example 19

The procedures of Example 17 were repeated in the same manner except that the following ethylene/α-olefin copolymer rubber was used.

ethylene content: 80 mole%
α-olefin: propylene
[η] : 3.0
iodine value: 3 (vinylnorbornene)

Example 20

The procedures of Example 17 were repeated in the same manner except that the following ethylene/α-olefin copolymer rubber was used.

ethylene content: 90 mole%
α-olefin: 1-butene
[η] : 1.3

Example 21

The procedures of Example 17 were repeated in the same manner except that the following polyorganosilane ëwas used.

Polyorganosilane

chemical formula: $(CH_3)_{1.8}(CH_2=CH)_{0.2}SiO$
number average molecular weight: $5.1 \times 10^3$

Example 22

The procedures of Example 17 were repeated in the same manner except that the following silane-treated silica was used.

silica: dry method silica having specific surface area of 200 $m^2/g$
silane coupling agent: vinyltrimethoxy-silane
treatment amount (carbon content): 2.5% by weight

Example 23

The procedures of Example 17 were repeated in the same manner except that the following silane-treated silica was used.

silica: dry method silica having specific surface area of 200 $m^2/g$
silane coupling agent: vinyltrimethoxysilane
treatment amount (carbon content): 3.0% by weight

Comparative Example 4

The procedures of Example 17 were repeated in the same manner except that the polyorganosilane was not used and the untreated silica was used.

Comparative Example 5

The procedures of Example 17 were repeated in the same manner except that the following polyorganosiloxane was used and the untreated silica was used.

Polydimethylsiloxane

number average molecular weight: $4.8 \times 10^3$

Example 24

The procedures of Example 17 were repeated in the same manner except that the treatment amount of the silane-treated silica was changed to a carbon content of 0.5% by weight.

Example 25

The procedures of Example 17 were repeated in the same manner except that the treatment amount of the silane-treated silica was changed to a carbon content of 3.5% by weight.

Example 26

The procedures of Example 17 were repeated in the same manner except that the number average molecular weight of the polyorganosiloxane was changed to $6 \times 10^4$.

Example 27

The procedures of Example 17 were repeated in the same manner except that the following polyorganosiloxane was used.

Polyorganosiloxane

average composition: $(CH_3)_{1.9}(C\ell CH_2CH_2CH_2)_{0.1}SiO$
number average molecular weight: $5.5 \times 10^3$

Example 28

The procedures of Example 17 were repeated in the same manner except that the following polyorganosiloxane was used.

Polyorganosiloxane

average composition: $(CH_3)_{1.5}(C\ell CH_2CH_2CH_2)_{0.5}SiO$
number average molecular weight: $5.5 \times 10^3$

Example 29

The procedures of Example 18 were repeated in the same manner except that a modified ethylene/α-olefin copolymer rubber obtained by modifying the ethylene/α-olefin copolymer rubber used in Example 18 with maleic anhydride was used.
maleic anhydride content: $5 \times 10^{-3}$ mole per 100 g of copolymer rubber

Example 30

The procedures of Example 29 were repeated in the same manner except that the following polyorganosiloxane was used.

Polyorganosiloxane

average composition: $(CH_3)_{1.8}(CH_2=CH)_{0.2}SiO$
number average molecular weight: $4.8 \times 10^3$

Example 31

The procedures of Example 29 were repeated in the same manner except that the following silane-treated silica was used.
silica: dry method silica having specific surface area of 200 $m^2/g$
silane coupling agent: vinyltrimethoxysilane

treatment amount (carbon content): 2.5% by weight

Example 32

The procedures of Example 20 were repeated in the same manner except that a modified ethylene/α-olefin copolymer rubber obtained by modifying the ethylene/α-olefin copolymer rubber obtained by modifying the ethylene/α-olefin copolymer rubber used in Example 20 with ethyl acrylate was used.

ethyl acrylate content: $10^{-2}$ mole% per 100 g of copolymer rubber

Example 33

The procedures of Example 17 were repeated in the same manner except that the following ethylene/α-olefin copolymer rubber was used, the recipe was changed as indicated below and curing was conducted at 160 °C for 20 minutes.

Ethylene/α-olefin copolymer rubber

ethylene content: 70 mole%
α-olefin: propylene
$[\eta]$ : 2.7
iodine value: 10 (ethylidene-norbornene)

Recipe
ethylene/α-olefin copolymer: 100.0 parts by weight
polyorganosiloxane: 3.0 parts by weight
silane-treated silica: 30.0 parts by weight
stearic acid: 2.0 parts by weight
zinc flower: 5.0 parts by weight
promoter DPTT[1)]: 0.5 parts by weight
promoter ZnBDC[2)]: 1.5 parts by weight
promoter MBTS[3)]: 3.0 parts by weight
sulfur: 1.5 parts by weight
antioxidant AANP[4)]: 1.0 part by weight

Example 34

The procedures of Example 17 were repeated in the same manner except that the recipe was changed as indicated below.

Recipe

ethylene/α-olefin copolymer rubber: 100.0 parts by weight
polyorganosiloxane: 3.0 parts by weight
silane-treated silica: 15.0 parts by weight
stearic acid: 2.0 parts by weight
zinc flower: 5.0 parts by weight
organic peroxide: 5.0 parts by weight

Note
1) dipentamethylene-thiuram tetrasulfide supplied by Ouchi Shinko

2) zinc di-n-butyldithiocarbamate supplied by Ouchi Shinko

3) dibenzothiazyl disulfide supplied by Ouchi Shinko

4) powdery condensate of aldol and 1-naphthylamine supplied by Ouchi Shinko

sulfur: 0.2 part by weight
antioxidant MB: 2.0 parts by weight
antioxidant 200: 1.0 part by weight

Example 35

The procedure of Example 17 were repeated in the same manner except that the recipe was changed as indicated below.

Recipe

ethylene/α-olefin copolymer rubber: 100.0 parts by weight
poluyorganosiloxane: 3.0 parts by weight
silane-treated silica: 50.0 parts by weight
stearic acid: 2.0 parts by weight
synthetic lubricating oil[1)]: 20.0 parts by weight
zinc flower: 5.0 parts by weight
organic peroxide: 5.0 parts by weight
sulfur: 0.2 part by weight
antioxidant MB: 2.0 parts by weight
antioxidant 200: 1.0 part by weight

Example 36

The procedures of Example 17 were repeated in the same manner except that the amount incorporated of the polyorganosiloxane was changed to 20 parts by weight.

Example 37

The procedures of Example 17 were repeated in the same manner except that the following silane-treated silica was used.

Silane-treated silica

silica: Nipsil $VH_3$ (supplied by Nippon Silica)
silane coupling agent: chloropropyltrimethoxysilane
treatment amount (carbon content): 2.5% by weight

Comparative Example 6

The procedures of Example 17 were repeated in the same manner except that the recipe was changed as indicated below.

Recipe
ethylene/α-olefin copolymer rubber: 100.0 parts by weight
polyorganosiloxane: 3.0 parts by weight
silane-treated silica: 5.0 parts by weight
stearic acid: 2.0 parts by weight
zinc flower: 5.0 parts by weight
organic peroxide: 5.0 parts by weight
sulfur: 0.2 part by weight
antioxidant MB: 2.0 parts by weight
antioxidant 200: 1.0 part by weight

Note
1) Lucant®HC-600 supplied Mitsui Petrochemical

Comparative Example 7

The procedures of Example 37 were repeated in the same manner except that the recipe was changed as indicated below.

Recipe

ethylene/α-olefin copolymer rubber: 100 parts by weight
polyorganosiloxane: 3.0 parts by weight
silane-treated silica: 110.0 parts by weight
stearic acid: 2.0 parts by weight
synthetic lubricating oil: 60.0 parts by weight
zinc flower: 5.0 parts by weight
organic peroxide: 5.0 parts by weight
sulfur: 0.2 part by weight
antioxidant MB: 2.0 parts by weight
antioxidant 200: 1.0 part by weight

The results obtained in the foregoing examples are shown in Table 2.

Table 2

| | Ex.17 | Ex.18 | Ex.19 | Ex.20 |
|---|---|---|---|---|
| **Composition** | | | | |
| ethylene/α-olefin copolymer rubber | | | | |
| I.(η):1.8, α-olefin:$C_3$, $C_2$ content:68mole%, IV:5(ENB) | 100 | | | |
| II.(η):1.5, α-olefin:$C_3$, $C_2$ content:80mole%, | | 100 | | |
| III.(η):3.0, α-olefin:$C_3$, $C_2$ content:80mole%, IV:3(VNB) | | | 100 | |
| IV.(η):1.3, α-olefin:$C_4$, $C_2$ content:90mole%, | | | | 100 |
| V.(η):2.7, α-olefin:$C_3$, $C_2$ content:70mole%, IV:10(ENB) | | | | |
| MAH-II | | | | |
| ethylacrylate-IV | | | | |
| polyorganosiloxane | | | | |
| $(CH_3)_{1.8}(ClCH_2CH_2CH_2)_{0.2}SiO$ Mn: $5.0 \times 10^3$ | 3 | 3 | 3 | 3 |
| $(CH_3)_{1.9}(ClCH_2CH_2CH_2)_{0.1}SiO$ Mn: $5.5 \times 10^3$ | | | | |
| $(CH_3)_{1.5}(ClCH_2CH_2CH_2)_{0.5}SiO$ Mn: $5.2 \times 10^3$ | | | | |
| $(CH_3)_{1.8}(ClCH_2CH_2CH_2)_{0.2}SiO$ Mn: $6.0 \times 10^4$ | | | | |
| $(CH_3)_{1.8}(CH_2{=}CH)_{0.2}SiO$ Mn: $5.1 \times 10^3$ | | | | |
| polydimethylsiloxane Mn: $4.8 \times 10^3$ | | | | |
| silica type filler | | | | |
| chloropropyltrimethoxysilane-treated dry method silica (C cont.:2.0wt%) | 30 | 30 | 30 | 30 |
| chloropropyltrimethoxysilane-treated dry method silica (C cont.:0.5wt%) | | | | |
| chloropropyltrimethoxysilane-treated dry method silica (C cont.:3.5wt%) | | | | |
| vinyltrimethoxysilane-treated dry method silica (C cont.:2.5wt%) | | | | |
| allyltrimethoxysilane-treated dry method silica (C cont.:3.0wt%) | | | | |
| chloropropyltrimethoxysilane-treated wet method silica (C cont.:2.5wt%) | | | | |
| untreated dry method silica | | | | |
| **Physical Properties of Cured Rubber** | | | | |
| normal state | | | | |
| tensile strength TB ($kg/cm^2$) | 177 | 193 | 225 | 230 |
| elongation EB (%) | 590 | 650 | 620 | 650 |
| heat aging resistance (180°C x 96 hours) | | | | |
| tensile strength retention ratio AR (TB) (%) | 92 | 93 | 90 | 93 |
| elongation retention ratio AR (TB) (%) | 86 | 89 | 93 | 93 |

Note; Ex.: Example, cont.: content,

Table 2 (continued)

| | Ex.21 | Ex.22 | Ex.23 | Comp. Ex.4 |
|---|---|---|---|---|
| **Composition** | | | | |
| ethylene/α-olefin copolymer rubber | | | | |
| I.(η):1.8,α-olefin:$C_3$,$C_2$ content:68mole%,IV:5(ENB) | 100 | 100 | 100 | 100 |
| II.(η):1.5,α-olefin:$C_3$,$C_2$ content:80mole%, | | | | |
| III.(η):3.0,α-olefin:$C_3$,$C_2$ content:80mole%,IV:3(VNB) | | | | |
| IV.(η):1.3,α-olefin:$C_4$,$C_2$ content:90mole%, | | | | |
| V.(η):2.7,α-olefin:$C_3$,$C_2$ content:70mole%,IV:10(ENB) | | | | |
| MAH-II | | | | |
| ethylacrylate-IV | | | | |
| polyorganosiloxane | | | | |
| $(CH_3)_{1.8}(ClCH_2CH_2CH_2)_{0.2}SiO$ Mn: $5.0 \times 10^3$ | | 3 | 3 | |
| $(CH_3)_{1.9}(ClCH_2CH_2CH_2)_{0.1}SiO$ Mn: $5.5 \times 10^3$ | | | | |
| $(CH_3)_{1.5}(ClCH_2CH_2CH_2)_{0.5}SiO$ Mn: $5.2 \times 10^3$ | | | | |
| $(CH_3)_{1.8}(ClCH_2CH_2CH_2)_{0.2}SiO$ Mn: $6.0 \times 10^4$ | | | | |
| $(CH_3)_{1.8}(CH_2{=}CH)_{0.2}SiO$ Mn: $5.1 \times 10^3$ | 3 | | | |
| polydimethylsiloxane Mn: $4.8 \times 10^3$ | | | | |
| silica type filler | | | | |
| chloropropyltrimethoxysilane-treated dry method silica (C cont.:2.0wt%) | 30 | | | |
| chloropropyltrimethoxysilane-treated dry method silica (C cont.:0.5wt%) | | | | |
| chloropropyltrimethoxysilane-treated dry method silica (C cont.:3.5wt%) | | | | |
| vinyltrimethoxysilane-treated dry method silica (C cont.:2.5wt%) | | 30 | | |
| allyltrimethoxysilane-treated dry method silica (C cont.:3.0wt%) | | | 30 | |
| chloropropyltrimethoxysilane-treated wet method silica (C cont.:2.5wt%) | | | | |
| untreated dry method silica | | | | 30 |
| **Physical Properties of Cured Rubber** | | | | |
| normal state | | | | |
| tensile strength TB ($kg/cm^2$) | 165 | 163 | 170 | 121 |
| elongation EB (%) | 640 | 560 | 590 | 490 |
| heat aging resistance (180°C x 96 hours) | | | | |
| tensile strength retention ratio AR (TB) (%) | 89 | 87 | 91 | <10 |
| elongation retention ratio AR (TB) (%) | 86 | 89 | 92 | <10 |

Note; Ex.: Example, cont.: content, Comp.Ex.: Comparative Example

Table 2 (continued)

| | Comp. Ex.5 | Ex.24 | Ex.25 | Ex.26 |
|---|---|---|---|---|
| Composition | | | | |
| ethylene/α-olefin copolymer rubber | | | | |
| I.(η):1.8,α-olefin:$C_3$,$C_2$ content:68mole%,IV:5(ENB) | 100 | 100 | 100 | 100 |
| II.(η):1.5,α-olefin:$C_3$,$C_2$ content:80mole%, | | | | |
| III.(η):3.0,α-olefin:$C_3$,$C_2$ content:80mole%,IV:3(VNB) | | | | |
| IV.(η):1.3,α-olefin:$C_4$,$C_2$ content:90mole%, | | | | |
| V.(η):2.7,α-olefin:$C_3$,$C_2$ content:70mole%,IV:10(ENB) | | | | |
| MAH-II | | | | |
| ethylacrylate-IV | | | | |
| polyorganosiloxane | | | | |
| $(CH_3)_{1.8}(ClCH_2CH_2CH_2)_{0.2}SiO$ Mn: $5.0 \times 10^3$ | | 3 | 3 | |
| $(CH_3)_{1.9}(ClCH_2CH_2CH_2)_{0.1}SiO$ Mn: $5.5 \times 10^3$ | | | | |
| $(CH_3)_{1.5}(ClCH_2CH_2CH_2)_{0.5}SiO$ Mn: $5.2 \times 10^3$ | | | | |
| $(CH_3)_{1.8}(ClCH_2CH_2CH_2)_{0.2}SiO$ Mn: $6.0 \times 10^4$ | | | | 3 |
| $(CH_3)_{1.8}(CH_2{=}CH)_{0.2}SiO$ Mn: $5.1 \times 10^3$ | | | | |
| polydimethylsiloxane Mn: $4.8 \times 10^3$ | 3 | | | |
| silica type filler | | | | |
| chloropropyltrimethoxysilane-treated dry method silica (C cont.:2.0wt%) | | | | |
| chloropropyltrimethoxysilane-treated dry method silica (C cont.:0.5wt%) | | 30 | | 30 |
| chloropropyltrimethoxysilane-treated dry method silica (C cont.:3.5wt%) | | | 30 | |
| vinyltrimethoxysilane-treated dry method silica (C cont.:2.5wt%) | | | | |
| allyltrimethoxysilane-treated dry method silica (C cont.:3.0wt%) | | | | |
| chloropropyltrimethoxysilane-treated wet method silica (C cont.:2.5wt%) | | | | |
| untreated dry method silica | 30 | | | |
| Physical Properties of Cured Rubber | | | | |
| normal state | | | | |
| tensile strength TB ($kg/cm^2$) | 98 | 172 | 186 | 170 |
| elongation EB (%) | 350 | 570 | 600 | 590 |
| heat aging resistance (180°C x 96 hours) | | | | |
| tensile strength retention ratio AR (TB) (%) | <10 | 88 | 91 | 90 |
| elongation retention ratio AR (TB) (%) | <10 | 85 | 87 | 88 |

Note; Ex.: Example, cont.: content, Comp.Ex.: Comparative Example

Table 2 (continued)

| | Ex.27 | Ex.28 | EX.29 | Ex.30 |
|---|---|---|---|---|
| **Composition** | | | | |
| ethylene/α-olefin copolymer rubber | | | | |
| I.(η):1.8,α-olefin:$C_3$,$C_2$ content:68mole%,IV:5(ENB) | 100 | 100 | | |
| II.(η):1.5,α-olefin:$C_3$,$C_2$ content:80mole%, | | | | |
| III.(η):3.0,α-olefin:$C_3$,$C_2$ content:80mole%,IV:3(VNB) | | | | |
| IV.(η):1.3,α-olefin:$C_4$,$C_2$ content:90mole%, | | | | |
| V.(η):2.7,α-olefin:$C_3$,$C_2$ content:70mole%,IV:10(ENB) | | | | |
| MAH-II | | | 100 | 100 |
| ethylacrylate-IV | | | | |
| polyorganosiloxane | | | | |
| $(CH_3)_{1.8}(ClCH_2CH_2CH_2)_{0.2}SiO$ Mn: $5.0 \times 10^3$ | | | 3 | |
| $(CH_3)_{1.9}(ClCH_2CH_2CH_2)_{0.1}SiO$ Mn: $5.5 \times 10^3$ | 3 | | | |
| $(CH_3)_{1.5}(ClCH_2CH_2CH_2)_{0.5}SiO$ Mn: $5.2 \times 10^3$ | | 3 | | |
| $(CH_3)_{1.8}(ClCH_2CH_2CH_2)_{0.2}SiO$ Mn: $6.0 \times 10^4$ | | | | |
| $(CH_3)_{1.8}(CH_2{=}CH)_{0.2}SiO$ Mn: $5.1 \times 10^3$ | | | 3 | |
| polydimethylsiloxane Mn: $4.8 \times 10^3$ | | | | |
| silica type filler | | | | |
| chloropropyltrimethoxysilane-treated dry method silica (C cont.:2.0wt%) | 30 | 30 | 30 | 30 |
| chloropropyltrimethoxysilane-treated dry method silica (C cont.:0.5wt%) | | | | |
| chloropropyltrimethoxysilane-treated dry method silica (C cont.:3.5wt%) | | | | |
| vinyltrimethoxysilane-treated dry method silica (C cont.:2.5wt%) | | | | |
| allyltrimethoxysilane-treated dry method silica (C cont.:3.0wt%) | | | | |
| chloropropyltrimethoxysilane-treated wet method silica (C cont.:2.5wt%) | | | | |
| untreated dry method silica | | | | |
| **Physical Properties of Cured Rubber** | | | | |
| normal state | | | | |
| tensile strength TB ($kg/cm^2$) | 162 | 181 | 252 | 227 |
| elongation EB (%) | 610 | 560 | 640 | 740 |
| heat aging resistance (180°C x 96 hours) | | | | |
| tensile strength retention ratio AR (TB) (%) | 91 | 89 | 98 | 99 |
| elongation retention ratio AR (TB) (%) | 86 | 92 | 97 | 95 |

Note; Ex.: Example, cont.: content,

Table 2 (continued)

| | Ex.31 | Ex.32 | Ex.33 | Ex.34 |
|---|---|---|---|---|
| Composition | | | | |
| ethylene/α-olefin copolymer rubber | | | | |
| I.(η):1.8,α-olefin:$C_3$,$C_2$ content:68mole%,IV:5(ENB) | | | | 100 |
| II.(η):1.5,α-olefin:$C_3$,$C_2$ content:80mole%, | | | | |
| III.(η):3.0,α-olefin:$C_3$,$C_2$ content:80mole%,IV:3(VNB) | | | | |
| IV.(η):1.3,α-olefin:$C_4$,$C_2$ content:90mole%, | | | | |
| V.(η):2.7,α-olefin:$C_3$,$C_2$ content:70mole%,IV:10(ENB) | | | 100 | |
| MAH-II | 100 | | | |
| ethylacrylate-IV | | 100 | | |
| polyorganosiloxane | | | | |
| $(CH_3)_{1.8}(ClCH_2CH_2CH_2)_{0.2}SiO$ Mn: $5.0 \times 10^3$ | 3 | 3 | 3 | 3 |
| $(CH_3)_{1.9}(ClCH_2CH_2CH_2)_{0.1}SiO$ Mn: $5.5 \times 10^3$ | | | | |
| $(CH_3)_{1.5}(ClCH_2CH_2CH_2)_{0.5}SiO$ Mn: $5.2 \times 10^3$ | | | | |
| $(CH_3)_{1.8}(ClCH_2CH_2CH_2)_{0.2}SiO$ Mn: $6.0 \times 10^4$ | | | | |
| $(CH_3)_{1.8}(CH_2{=}CH)_{0.2}SiO$ Mn: $5.1 \times 10^3$ | | | | |
| polydimethylsiloxane Mn: $4.8 \times 10^3$ | | | | |
| silica type filler | | | | |
| chloropropyltrimethoxysilane-treated dry method silica (C cont.:2.0wt%) | | 30 | 30 | 15 |
| chloropropyltrimethoxysilane-treated dry method silica (C cont.:0.5wt%) | | | | |
| chloropropyltrimethoxysilane-treated dry method silica (C cont.:3.5wt%) | | | | |
| vinyltrimethoxysilane-treated dry method silica (C cont.:2.5wt%) | 30 | | | |
| allyltrimethoxysilane-treated dry method silica (C cont.:3.0wt%) | | | | |
| chloropropyltrimethoxysilane-treated wet method silica (C cont.:2.5wt%) | | | | |
| untreated dry method silica | | | | |
| Physical Properties of Cured Rubber | | | | |
| normal state | | | | |
| tensile strength TB ($kg/cm^2$) | 244 | 238 | 161 | 163 |
| elongation EB (%) | 590 | 550 | 470 | 640 |
| heat aging resistance (180°C x 96 hours) | | | | |
| tensile strength retention ratio AR (TB) (%) | 96 | 95 | 92 | 88 |
| elongation retention ratio AR (TB) (%) | 100 | 98 | 81 | 86 |

Note; Ex.: Example, cont.: content,

Table 2 (continued)

| | Ex.35 | Ex.36 | Ex.37 | Comp. Ex.6 | Comp. Ex.7 |
|---|---|---|---|---|---|
| **Composition** | | | | | |
| ethylene/α-olefin copolymer rubber | | | | | |
| I.(η):1.8,α-olefin:$C_3$,$C_2$ content:68mole%,IV:5(ENB) | 100 | 100 | 100 | 100 | 100 |
| II.(η):1.5,α-olefin:$C_3$,$C_2$ content:80mole%, | | | | | |
| III.(η):3.0,α-olefin:$C_3$,$C_2$ content:80mole%,IV:3(VNB) | | | | | |
| IV.(η):1.3,α-olefin:$C_4$,$C_2$ content:90mole%, | | | | | |
| V.(η):2.7,α-olefin:$C_3$,$C_2$ content:70mole%,IV:10(ENB) | | | | | |
| MAH-II | | | | | |
| ethylacrylate-IV | | | | | |
| polyorganosiloxane | | | | | |
| $(CH_3)_{1.8}(ClCH_2CH_2CH_2)_{0.2}SiO$ Mn: $5.0 \times 10^3$ | 3 | 20 | 3 | 3 | 3 |
| $(CH_3)_{1.9}(ClCH_2CH_2CH_2)_{0.1}SiO$ Mn: $5.5 \times 10^3$ | | | | | |
| $(CH_3)_{1.5}(ClCH_2CH_2CH_2)_{0.5}SiO$ Mn: $5.2 \times 10^3$ | | | | | |
| $(CH_3)_{1.8}(ClCH_2CH_2CH_2)_{0.2}SiO$ Mn: $6.0 \times 10^4$ | | | | | |
| $(CH_3)_{1.8}(CH_2{=}CH)_{0.2}SiO$ Mn: $5.1 \times 10^3$ | | | | | |
| polydimethylsiloxane Mn: $4.8 \times 10^3$ | | | | | |
| silica type filler | | | | | |
| chloropropyltrimethoxysilane-treated dry method silica (C cont.:2.0wt%) | 50 | 30 | | 5 | |
| chloropropyltrimethoxysilane-treated dry method silica (C cont.:0.5wt%) | | | | | |
| chloropropyltrimethoxysilane-treated dry method silica (C cont.:3.5wt%) | | | | | |
| vinyltrimethoxysilane-treated dry method silica (C cont.:2.5wt%) | | | | | |
| allyltrimethoxysilane-treated dry method silica (C cont.:3.0wt%) | | | | | |
| chloropropyltrimethoxysilane-treated wet method silica (C cont.:2.5wt%) | | | 30 | | 110 |
| untreated dry method silica | | | | | |
| **Physical Properties of Cured Rubber** | | | | | |
| normal state | | | | | |
| tensile strength TB ($kg/cm^2$) | 184 | 147 | 171 | 51 | 36 |
| elongation EB (%) | 670 | 760 | 560 | 420 | 250 |
| heat aging resistance (180°C x 96 hours) | | | | | |
| tensile strength retention ratio AR (TB) (%) | 90 | 97 | 89 | - | - |
| elongation retention ratio AR (TB) (%) | 82 | 96 | 82 | - | - |

Note; Ex.: Example, cont.: content, Comp. Ex.: Comparative Example

Example 38

A rubber composition was prepared by using the following modified ethylene/α-olefin copolymer rubber (A), silica type filler (B) and polyorganosiloxane (C) according to the following recipe.

Modified ethylene/α-olefin copolymer rubber

α-olefin: propylene
ethylene/propylene molar ratio: 80/20
Mooney viscosity $ML_{1+4}$ (100 °C): 20
maleic anhydride content: 0.5% by weight

Silica type filler (B)

dry method silica having specific surface area of $200^2$/g

Polyorganosiloxane (C)

chemical formula: $(CH_2)_{1.8}(CH_2=CH)_{0.2}SiO$
number average molecular weight Mn: $5.1 \times 10^3$

Recipe

ethylene/α-olefin copolymer rubber: 100.0 parts by weight
polyorganosiloxane: 3.0 parts by weight
silica type filler: 30.0 parts by weight
stearic acid: 2.0 parts by weight
zinc flower: 5.0 parts by weight
organic peroxide[1)]: 5.0 parts by weight
sulfur: 0.2 part by weight
antioxidant MB[2]: 2.0 parts by weight
antioxidant 200[3)]: 1.0 part by weight

Kneading was carried out at 60 to 70 °C for 20 minutes by an 20,3 cm (8-inch) open roll. Then, the mixture was press-cured at 170 °C for 10 minutes to form a cured sheet having a thickness of 2 mm, and the sheet was used for the measurement.

The following properties were measured according to the method of JIS K-6301.

Normal state physical properties

tensile strength (TB) and elongation (EB)

Heat aging resistance (heat aging conditions: 180 °C x 96 hours)

tensile strength retention ratio AR(TB) and elongation retention ratio AR(EB)

The obtained results are shown in Table 3.

Example 39

The procedures of Example 38 were repeated in the same manner except that the following modified ethylene/α-olefin copolymer rubber was used.

α-olefin: propylene
ethylene/propylene molar ratio: 70/30
iodine value: 2 (vinylnorbornene)
Mooney viscosity $ML_{1+4}$ (100 °C): 60
maleic anhydride: 0.5% by weight

Note
1) Mitsui DCP 40C supplied by Mitsui Petrochemical

2) 2-mercaptobenzimidazole supplied by Ouchi Shinko

3) 2,6-di-tert-butyl-4-methylphenol supplied by Ouchi Shinko

Example 40

The procedures of Example 38 were repeated in the same manner except that the following modified ethylene/α-olefin copolymer rubber was used.

α-olefin: 1-butene
ethylene/1-butene molar ratio: 90/10
Mooney viscosity $ML_{1+4}$ (100 °C): 15
maleic anhydride: 1.0% by weight

Recipe

ethylene/α-olefin copolymer rubber: 100.0 parts by weight
polyorganosiloxane: 20.0 parts by weight
silica type filler: 30.0 parts by weight
stearic acid: 2.0 parts by weight
zinc flower: 5.0 parts by weight
organic peroxide[1)]: 5.0 parts by weight
sulfur: 0.2 part by weight
antioxidant MB[2)]: 2.0 parts by weight
antioxidant 200[3)]: 1.0 part by weight

Example 42

The procedures of Example 38 were repeated in the same manner except that the following polyorganosilane was used.

Polyorganosilane

chemical formula: $(CH_3)_{1.9}(CH_2=CH)_{0.1}SiO$
number average molecular weight: $4.5 \times 10^3$

Example 43

The procedures of Example 38 were repeated in the same manner except that the following polyorganosiloxane was used.

Polyorganosiloxane

average composition: $(CH_3)_{1.5}(CH_2=CH)_{0.5}SiO$
number average molecular weight: $6.1 \times 10^3$

Example 44

The procedures of Example 38 were repeated in the same manner except that the number average molecular weight of the polyorganosiloxane was changed to $8.0 \times 10^4$.

Example 45

The procedures of Example 38 were repeated in the same manner except that the following silica type filler was used.

Silica type filler

silica: Nipsil $VH_3$ (supplied by Nippon Silica)

Example 46

The procedures of Example 38 were repeated in the same manner except that the following silica type filler was used and the recipe was changed as indicated below.

Silica type filler
calcined clay (Satenton No. 1 supplied by Engelhard Minerals & Chem.)

Recipe

modified ethylene/α-olefin copolymer rubber: 100.0 parts by weight
polyorganosiloxane: 3.0 parts by weight
calcined clay: 60.0 parts by weight
stearic acid: 2.0 parts by weight
zinc flower: 5.0 parts by weight
organic peroxide[1)]: 5.0 parts by weight
sulfur: 0.2 part by weight
antioxidant MB[2)]: 2.0 parts by weight
antioxidant 200[3)]: 1.0 part by weight

Comparative Example 8

The procedures of Example 38 were repeated in the same manner except that the polyorganosiloxane was not used.

Comparative Example 9

The procedures of Example 38 were repeated in the same manner except that the following polyorganosiloxane was used.

Polydimethylsiloxane

number average molecular weight: $4.8 \times 10^3$

Example 47

The procedures of Example 38 were repeated in the same manner except that the following modified ethylene/α-olefin copolymer rubber was used.
α-olefin: 1-butene
ethylene/1-butene molar ratio: 90/10
Mooney viscosity $ML_{1+4}$ (100 °C): 30
ethyl acrylate content: 2.0% by weight

Comparative Example 10

The procedures of Example 46 were repeated in the same manner except that the recipe was changed as indicated below.

Recipe

modified ethylene/α-olefin copolymer rubber: 100.0 parts by weight
polyorganosiloxane: 3.0 parts by weight
calcined clay: 5.0 parts by weight
stearic acid: 2.0 parts by weight
zinc flower: 5.0 parts by weight
organic peroxide: 5.0 parts by weight
sulfur: 0.2 part by weight
antioxidant MB: 2.0 parts by weight

antioxidant 200: 1.0 part by weight

Comparative Example 11

The procedures of Example 46 were repeated in the same manner except that the recipe was changed as indicated below.

Recipe

modified ethylene/α-olefin copolymer rubber: 100.0 parts by weight
polyorganosiloxane: 3.0 parts by weight
calcined clay: 110.0 parts by weight
stearic acid: 2.0 parts by weight
synthetic lubricating oil[1)]: 60.0 parts by weight
zinc flower: 5.0 parts by weight
organic peroxide: 5.0 parts by weight
sulfur: 0.2 part by weight
antioxidant MB: 2.0 parts by weight
antioxidant 200: 1.0 part by weight

Note
1) Lucant®HC-600 supplied by Mitsui Petrochemical

Table 3

| | Ex.38 | Ex.39 | Ex.40 | Ex.41 | Ex.42 | Ex.43 |
|---|---|---|---|---|---|---|
| **Composition** | | | | | | |
| modified/α-olefin copolymer rubber | | | | | | |
| I. $C_2/C_3$=80/20, (molar ratio), $ML_{1+4}$:20, MAH content:0.5wt% | 100 | | | 100 | 100 | 100 |
| II. $C_2/C_3$=70/30, (molar ratio), IV:2(VNB), $ML_{1+4}$:20, MAH content:0.5wt% | | 100 | | | | |
| III. $C_2/C_4$=90/10, (molar ratio), $ML_{1+4}$:15, MAH content:0.5wt% | | | 100 | | | |
| IV. $C_2/C_4$=90/10, (molar ratio), $ML_{1+4}$:30, ethyl acrylate content 2.0wt% | | | | | | |
| polyorganosiloxane | | | | | | |
| $(CH_3)_{1.8}(CH_2=CH)_{0.2}SiO$ Mn:5.1 x $10^3$ | 3 | 3 | 3 | 20 | | |
| $(CH_3)_{1.9}(CH_2=CH)_{0.1}SiO$ Mn:4.5 x $10^3$ | | | | | 3 | |
| $(CH_3)_{1.5}(CH_2=CH)_{0.5}SiO$ Mn:6.1 x $10^3$ | | | | | | 3 |
| $(CH_3)_{1.8}(CH_2=CH)_{0.2}SiO$ Mn:8.0 x $10^4$ | | | | | | |
| polydimethylsiloxane Mn:4.8 x $10^3$ | | | | | | |
| silica type filler | | | | | | |
| dry method silica | 30 | 30 | 30 | 30 | 30 | 30 |
| wet method silica | | | | | | |
| calcined clay | | | | | | |
| **Physical Properties of Cured Rubber** | | | | | | |
| normal state | | | | | | |
| tensile strength TB ($kg/cm^2$) | 206 | 215 | 214 | 171 | 196 | 221 |
| elongation EB (%) | 710 | 730 | 730 | 810 | 760 | 670 |
| heat aging resistance (180°C x 96 hours) | | | | | | |
| tensil strength retention ratio AR(TB) (%) | 72 | 76 | 72 | 94 | 70 | 75 |
| elongation retention ratio AR(EB) (%) | 64 | 70 | 71 | 75 | 66 | 66 |

Note; Ex.: Example Comp.Ex.: comparative Example

Table 3 (continued)

| | Ex.44 | Ex.45 | Ex.46 | Comp. Ex.8 | Comp. Ex.9 | Ex.47 |
|---|---|---|---|---|---|---|
| **Composition** | | | | | | |
| modified/α-olefin copolymer rubber | | | | | | |
| I. $C_2/C_3$=80/20, (molar ratio), $ML_{1+4}$:20, MAH content:0.5wt% | 100 | 100 | 100 | 100 | 100 | |
| II. $C_2/C_3$=70/30, (molar ratio), IV:2(VNB), $ML_{1+4}$:20, MAH content:0.5wt% | | | | | | |
| III. $C_2/C_4$=90/10, (molar ratio), $ML_{1+4}$:15, MAH content:0.5wt% | | | | | | |
| IV. $C_2/C_4$=90/10, (molar ratio), $ML_{1+4}$:30, ethyl acrylate content 2.0wt% | | | | | | 100 |
| polyorganosiloxane | | | | | | |
| $(CH_3)_{1.8}(CH_2{=}CH)_{0.2}SiO$ Mn:$5.1 \times 10^3$ | | 3 | 3 | | | 3 |
| $(CH_3)_{1.9}(CH_2{=}CH)_{0.1}SiO$ Mn:$4.5 \times 10^3$ | | | | | | |
| $(CH_3)_{1.5}(CH_2{=}CH)_{0.5}SiO$ Mn:$6.1 \times 10^3$ | | | | | | |
| $(CH_3)_{1.8}(CH_2{=}CH)_{0.2}SiO$ Mn:$8.0 \times 10^4$ | 3 | | | | | |
| polydimethylsiloxane Mn:$4.8 \times 10^3$ | | | | | 3 | |
| silica type filler | | | | | | |
| dry method silica | 30 | | | 30 | 30 | 30 |
| wet method silica | | 30 | | | | |
| calcined clay | | | 60 | | | |
| **Physical Properties of Cured Rubber** | | | | | | |
| normal state | | | | | | |
| tensile strength TB (kg/cm$^2$) | 210 | 196 | 121 | 151 | 103 | 200 |
| elongation EB ( % ) | 690 | 680 | 710 | 510 | 370 | 670 |
| heat aging resistance (180°C x 96 hours) | | | | | | |
| tensil strength retention ratio AR(TB) (%) | 74 | 68 | 61 | <10 | <10 | 76 |
| elongation retention ratio AR(EB) (%) | 65 | 60 | 60 | <10 | <10 | 68 |

Note; Ex.: Example Comp.Ex.: comparative Example

Table 3 (continued)

| | | Comp. Ex.10 | Comp. Ex.11 |
|---|---|---|---|
| **Composition** | | | |
| modified ethylene/α-olefin copolymer rubber | | | |
| I. $C_2/C_3$=80/20, (molar ratio), $ML_{1+4}$:20, MAH content:0.5 wt% | | 100 | 100 |
| II. $C_2/C_3$=70/30, (molar ratio), IV:2(VNB), $ML_{1+4}$:20, MAH content:0.5 wt% | | | |
| III. $C_2/C_4$=90/10, (molar ratio), $ML_{1+4}$:15, MAH content:0.5 wt% | | | |
| IV. $C_2/C_4$=90/10, (molar ratio), $ML_{1+4}$:30, ethyl acrylate content:2.0 wt% | | | |
| ethylene/ -olefin copolymer rubber, $C_2/C_3$=80/20 (molar ratio), $ML_{1+4}$:19 | | | |
| polyorganosiloxyane | | | |
| $(CH_3)_{1.8}(CH_2=CH)_{0.2}SiO$ | Mn: $5.1 \times 10^3$ | 3 | 3 |
| $(CH_3)_{1.9}(CH_2=CH)_{0.1}SiO$ | Mn: $4.5 \times 10^3$ | | |
| $(CH_3)_{1.6}(CH_2=CH)_{0.5}SiO$ | Mn: $6.1 \times 10^3$ | | |
| $(CH_3)_{1.8}(CH_2=CH)_{0.2}SiO$ | Mn: $8.0 \times 10^4$ | | |
| polydimethylsiloxane | Mn: $4.8 \times 10^3$ | | |
| silica type filler | dry method silica | | |
| | wet method silica | | |
| | calcined clay | 5 | 110 |
| **Phisical Properties of Cured Rubber** | | | |
| normal state | | | |
| tensile strength | TB ($kg/cm^2$) | 31 | 34 |
| elongation | EB ( % ) | 340 | 160 |
| heat aging resistance (180°C x 96 hours) | | | |
| tensile strength retention ratio | AR (TB) (%) | - | - |
| elongationretention ratio | AR (TB) (%) | - | - |

Note; Ex.: Example Comp.EX.: Comparative Example

Example 47

A rubber composition was prepared by using the following ethylene/α-olefin copolymer rubber (A), silica type filler (B) and polyorganosiloxane (C) according to the following recipe.

Ethylene/α-olefin copolymer rubber (A)

ethylene content: 68 mole%
α-olefin: propylene
[η] : 1.8
iodine value: 5 (ethylidene-norbornene)

Silica type filler (B)

silica: dry method silica having specific surface area of 200 $m^2/g$

Polyorganosiloxane (C)

chemical formula: $(CH_2)_{1.8}(CH_2=CH)_{0.2}SiO$
number average molecular weight Mn: $5.0 \times 10^3$

Recipe

ethylene/α-olefin copolymer rubber: 100.0 parts by weight
polyorganosiloxane: 3.0 parts by weight
silica type filler: 30.0 parts by weight
stearic acid: 2.0 parts by weight
zinc flower: 5.0 parts by weight
organic peroxide[1)]: 5.0 parts by weight
sulfur: 0.2 part by weight
antioxidant MB[2)]: 2.0 parts by weight
antioxidant 200[3)]: 1 part by weight

Kneading was carried out at 60 to 70°C for 20 minutes by an 20,3 cm (8-inch) open roll. Then, the mixture was press-cured at 170°C for 10 minutes to form a cured sheet having a thickness of 2 mm, and the sheet was used for the measurement.

The following properties were measured according to the method of JIS K-6301.

Normal state physical properties

tensile strength (TB) and elongation (EB)

Heat aging resistance (heat aging conditions: 180°C x 96 hours)

tensile strength retention ratio AR(TB) and
elongation retention ratio AR(EB)

The obtained results are shown in Table 4.

<u>Example 48</u>

The procedures of Example 47 were repeated in the same manner except that the following ethylene/α-olefin copolymer rubber.

ethylene content: 80 mole%
α-olefin: propylene
[η] : 1.5

<u>Example 49</u>

The procedures of Example 47 were repeated in the same manner except that the following ethylene/α-olefin copolymer rubber was used.

ethylene content: 80 mole%
α-olefin: propylene
[η] : 3.0
iodine value: 3 (vinylnorbornene)

Note
1) Mitsui DCP 40C supplied by Mitsui Petrochemical

2) 2-mercaptobenzimidazole supplied by Ouchi Shinko

3) 2,6-di-tert-butyl-4-methylphenol supplied by Ouchi Shinko

Example 50

The procedures of Example 47 were repeated in the same manner except that the following ethylene/α-olefin copolymer rubber was used.

ethylene content: 90 mole%
α-olefin: 1-butene
[η] : 1.3

Comparative Example 12

The procedures of Example 47 were repeated in the same manner except that the polyorganosiloxane was not used.

Comparative Example 13

The procedures of Example 47 repeated in the same manner except that the following polyorganosiloxane was used.

Polydimethylsiloxane

number average molecular weight: $4.8 \times 10^3$

Example 51

The procedures of Example 47 were repeated in the same manner except that the following polyorganosiloxane was used.

Polyorganosiloxane

average composition: $(CH_3)_{1.9}(C\ CH_2CH_2CH_2)_{0.1}SiO$
number average molecular weight: $5.5 \times 10^3$

Example 52

The procedures of Example 47 were repeated in the same manner except that the following polyorganosiloxane was used.

Polyorganosiloxane

average composition: $(CH_3)_{1.5}(C\ CH_2CH_2CH_2)_{0.5}SiO$
number average molecular weight: $5.2 \times 10^3$

Example 53

The procedures of Example 47 were repeated in the same manner except that the number average molecular weight of the polyorganosiloxane was changed to $6.0 \times 10^4$.

Example 54

The procedures of Example 48 were repeated in the same manner except that a modified ethylene/α-olefin copolymer rubber obtained by modifying the ethylene/α-olefin copolymer rubber used in Example 48 with maleic anhydride was used.

maleic anhydride content: $5 \times 10^{-3}$ mole per 100 g of copolymer rubber

Example 55

The procedures of Example 54 were repeated in the same manner except that the following silica type filler was used.

Silica type filler

wet method silica: Nipsil $VH_3$ (supplied Nippon Silica)

Example 56

The procedures of Example 50 were repeated in the same manner except that a modified ethylene/α-olefin copolymer rubber obtained by modifying the ethylene/α-olefin copolymer rubber used in Example 50 with ethyl acrylate was used.

ethyl acrylate content: $10^{-2}$ mole per 100 g of copolymer rubber

Example 57

The procedures of Example 47 were repeated in the same manner except that the following ethylene/α-olefin copolymer rubber was used, the recipe was changed as indicated below and curing was conductted at 160 ° C for 20 minutes.

Ethylene/α-olefin copolymer rubber

ethylene content: 70 mole%
α-olefin: propylene
[η] : 2.7
iodine value: 10 (ethylidene-norbornene)

Recipe

ethylene/α-olefin copolymer: 100.0 parts by weight
polyorganosiloxane: 3.0 parts by weight
silic type filler: 30.0 parts by weight
stearic acid: 2.0 parts by weight
zinc flower: 5.0 parts by weight
promoter DPTT[1)]: 0.5 part by weight
promoter ZnBDC[2)]: 1.5 parts by weight
promoter: MBTS[3)]: 3.0 parts by weight
sulfur: 1.5 parts by weight
antioxidant AANP[4)]: 1.0 part by weight

Example 58

The procedures of Example 47 were repeated in the same manner except that the recipe was changed as indicated below.

Recipe

ethylene/α-olefin copolymer rubber: 100.0 parts by weight
polyorganosiloxane: 20.0 parts by weight
silica type filler: 30.0 parts by weight

Note
1) dipentamethylene-thiuram tetrasulfide supplied by Ouchi Shinko

2) zinc di-n-butyldithiocarbamate supplied by Ouchi Shinko

3) dibenzothiazyl disulfide supplied by Ouchi Shinko

4) powdery condensate of aldol and 1-naphthylamine supplied by Ouchi Shinko

stearic acid: 2.0 parts by weight
zinc flower: 5.0 parts by weight
organic peroxide[1)]: 5.0 parts by weight
sulfur: 0.2 part by weight
antioxidant MB[2)]: 2.0 parts by weight
antioxidant 200[3)]: 1.0 part by weight

Example 59

The procedures of Example 54 were repeated in the same manner except that the recipe was changed as indicated below.

Recipe

modified ethylene/α-olefin copolymer rubber: 100.0 parts by weight
polyorganosiloxane: 3.0 parts by weight
silica type filler: 15.0 parts by weight
stearic acid: 2.0 parts by weight
zinc flower: 5.0 parts by weight
organic peroxide[1)]: 5.0 parts by weight
sulfur: 0.2 part by weight
antioxidant MB[2)]: 2.0 parts by weight
antioxidant 200[3)]: 1.0 part by weight

Example 60

The procedures of Example 54 were repeated in the same manner except that the recipe was changed as indicated below.

Recipe

modified ethylene/α-olefin copolymer rubber: 100.0 parts by weight
polyorganosiloxane: 3.0 parts by weight
silica type filler: 50.0 parts by weight
stearic acid: 2.0 parts by weight
synthetic lubricating oil[1)]: 20.0 parts by weight
zinc flower: 5.0 parts by weight
organic peroxide: 5.0 parts by weight
sulfur: 0.2 part by weight
antioxidant MB: 2.0 parts by weight
antioxidant 200: 1.0 part by weight

Comparative Example 14

The procedures of Example 55 were repeated in the same manner except that the recipe was changed as indicated below.

modified ethylene/α-olefin copolymer rubber: 100.0 parts by weight
polyorganosiloxane: 3.0 parts by weight
silica type filler: 5.0 parts by weight
stearic acid: 2.0 parts by weight
zinc flower: 5.0 parts by weight
organic peroxide: 5.0 parts by weight
sulfur: 0.2 part by weight
antioxidant MB: 2.0 parts by weight
antioxidant 200: 1.0 part by weight

Note
1) Lucant®HC-600 supplied Mitsui Petrochemical

Comparative Example 15

The procedures of Example 55 were repeated in the same manner except that the recipe was changed as indicated below.

Recipe

ethylene/α-olefin copolymer rubber: 100.0 parts by weight
polyorganosiloxane: 3.0 parts by weight
silica type filler: 110.0 parts by weight
stearic acid: 2.0 parts by weight
synthetic lubricating oil[1)]: 60.0 parts by weight
zinc flower: 5.0 parts by weight
organic peroxide: 5.0 parts by weight
sulfur: 0.2 part by weight
antioxidant MB: 3.0 parts by weight
antioxidant 200: 1.0 part by weight

Note
1) Lucant®HC-600 supplied by Mitsui Petrochemical

The results obtained in the foregoing examples are shown in Table 4.

Table 4

| | Ex.47 | Ex.48 | Ex.49 | Ex.50 | Comp. Ex.12 | Comp. Ex.13 |
|---|---|---|---|---|---|---|
| **Composition** | | | | | | |
| ethylene/α-olefin copolymer rubber | | | | | | |
| I.(η):1.8, α-olefin:$C_3$, $C_2$ content:68mole%, IV:5(ENB) | 100 | | | | 100 | 100 |
| II.(η):1.5, α-olefin:$C_3$, $C_2$ content:80mole%, | | 100 | | | | |
| III.(η):3.0, α-olefin:$C_3$, $C_2$ content:80mole%, IV:3(VNB) | | | 100 | | | |
| IV.(η):1.3, α-olefin:$C_4$, $C_2$ content:90mole%, | | | | 100 | | |
| V.(η):2.7, α-olefin:$C_3$, $C_2$ content:70mole%, IV:10(ENB) | | | | | | |
| MAH-II | | | | | | |
| ethyl acrylate-1V - | | | | | | |
| polyoreganosiloxane | | | | | | |
| $(CH_3)_{1.8}(ClCH_2CH_2CH_2)_{0.2}SiO$ Mn: 5.0 x $10^3$ | 3 | 3 | 3 | 3 | | |
| $(CH_3)_{1.9}(ClCH_2CH_2CH_2)_{0.1}SiO$ Mn: 5.5 x $10^3$ | | | | | | |
| $(CH_3)_{1.5}(ClCH_2CH_2CH_2)_{0.5}SiO$ Mn: 5.2 x $10^3$ | | | | | | |
| $(CH_3)_{1.8}(ClCH_2CH_2CH_2)_{0.2}SiO$ Mn: 6.0 x $10^3$ | | | | | | |
| polydimethylsiloxane Mn: 4.8 x $10^3$ | | | | | | 3 |
| silica type filler dry method silica | 30 | 30 | 30 | 30 | 30 | 30 |
| wet method silica | | | | | | |
| **Physical Properties of Cured Rubber** | | | | | | |
| normal state | | | | | | |
| tensile strength TB ($kg/cm^2$) | 167 | 187 | 210 | 218 | 121 | 98 |
| elongation EB ( % ) | 580 | 630 | 610 | 630 | 490 | 350 |
| heat aging resistance (180°C x 96 hours) | | | | | | |
| tensile strength retention ratio AR(TB) (%) | 76 | 75 | 75 | 81 | <10 | <10 |
| elongation retention ratio AR(EB) (%) | 71 | 73 | 74 | 70 | <10 | <10 |

Note; Ex.: Example Comp.Ex.: Comparative Example

Table 4 (continued)

| | Ex.51 | Ex.52 | Ex.53 | Ex.54 | Ex.55 | Ex.56 |
|---|---|---|---|---|---|---|
| **Composition** | | | | | | |
| ethylene/α-olefin copolymer rubber | | | | | | |
| I.(η):1.8,α-olefin:$C_3$,$C_2$ content:68mole%, IV:5(ENB) | 100 | 100 | 100 | | | |
| II.(η):1.5,α-olefin:$C_3$,$C_2$ content:80mole%, | | | | | | |
| III.(η):3.0,α-olefin:$C_3$,$C_2$ content:80mole%, IV:3(VNB) | | | | | | |
| IV.(η):1.3,α-olefin:$C_4$,$C_2$ content:90mole%, | | | | | | |
| V.(η):2.7,α-olefin:$C_3$,$C_2$ content:70mole%, IV:10(ENB) | | | | | | |
| MAH-II | | | | 100 | 100 | |
| ethyl acrylate-IV | | | | | | 100 |
| polyoreganosiloxane | | | | | | |
| $(CH_3)_{1.8}(ClCH_2CH_2CH_2)_{0.2}SiO$ Mn: $5.0 \times 10^3$ | | | | 3 | 3 | 3 |
| $(CH_3)_{1.9}(ClCH_2CH_2CH_2)_{0.1}SiO$ Mn: $5.5 \times 10^3$ | 3 | | | | | |
| $(CH_3)_{1.5}(ClCH_2CH_2CH_2)_{0.5}SiO$ Mn: $5.2 \times 10^3$ | | 3 | | | | |
| $(CH_3)_{1.8}(ClCH_2CH_2CH_2)_{0.2}SiO$ Mn: $6.0 \times 10^3$ | | | 3 | | | |
| polydimethylsiloxane Mn: $4.8 \times 10^3$ | | | | | | |
| silica type filler dry method silica | 30 | 30 | 30 | 30 | | 30 |
| wet method silica | | | | | 30 | |
| **Physical Properties of Cured Rubber** | | | | | | |
| normal state | | | | | | |
| tensile strength TB ($kg/cm^2$) | 160 | 171 | 161 | 241 | 212 | 210 |
| elongation EB ( % ) | 580 | 550 | 560 | 640 | 670 | 570 |
| heat aging resistance (180°C x 96 hours) | | | | | | |
| tensile strength retention ratio AR(TB) (%) | 72 | 81 | 77 | 80 | 76 | 82 |
| elongation retention ratio AR(EB) (%) | 65 | 72 | 73 | 84 | 72 | 76 |

Note; Ex.: Example Comp.Ex.: Comparative Example

Table 4 (continued)

| | Ex.57 | Ex.58 | Ex.59 | Ex.60 | Comp. Ex.14 | Comp. Ex.15 |
|---|---|---|---|---|---|---|
| **Composition** | | | | | | |
| ethylene/α-olefin copolymer rubber | | | | | | |
| I.(η):1.8,α-olefin:$C_3$,$C_2$ content:68mole%, IV:5(ENB) | | 100 | | | | |
| II.(η):1.5,α-olefin:$C_3$,$C_2$ content:80mole%, | | | | | | |
| III.(η):3.0,α-olefin:$C_3$,$C_2$ content:80mole%, IV:3(VNB) | | | | | | |
| IV.(η):1.3,α-olefin:$C_4$,$C_2$ content:90mole%, | | | | | | |
| V.(η):2.7,α-olefin:$C_3$,$C_2$ content:70mole%, IV:10(ENB) | 100 | | | | | |
| MAH-II | | | 100 | 100 | 100 | 100 |
| ethyl acrylate-IV | | | | | | |
| polyoreganosiloxane | | | | | | |
| $(CH_3)_{1.8}(ClCH_2CH_2CH_2)_{0.2}SiO$ Mn: 5.0 x $10^3$ | 3 | 20 | 3 | 3 | 3 | 3 |
| $(CH_3)_{1.9}(ClCH_2CH_2CH_2)_{0.1}SiO$ Mn: 5.5 x $10^3$ | | | | | | |
| $(CH_3)_{1.5}(ClCH_2CH_2CH_2)_{0.5}SiO$ Mn: 5.2 x $10^3$ | | | | | | |
| $(CH_3)_{1.8}(ClCH_2CH_2CH_2)_{0.2}SiO$ Mn: 6.0 x $10^3$ | | | | | | |
| polydimethylsiloxane Mn: 4.8 x $10^3$ | | | | | | |
| silica type filler dry method silica | 30 | 30 | 15 | 50 | | |
| wet method silica | | | | | 5 | 110 |
| **Physical Properties of Cured Rubber** | | | | | | |
| normal state | | | | | | |
| tensile strength TB ($kg/cm^2$) | 157 | 171 | 221 | 240 | 72 | 57 |
| elongation EB ( % ) | 480 | 850 | 520 | 660 | 550 | 230 |
| heat aging resistance (180°C x 96 hours) | | | | | | |
| tensile strength retention ratio AR(TB) (%) | 87 | 100 | 81 | 78 | - | - |
| elongation retention ratio AR(EB) (%) | 71 | 92 | 79 | 71 | - | - |

Note; Ex.: Example Comp.Ex.: Comparative Example

## Claims

**1.** A heat-resistant rubber composition comprising (A) 100 parts by weight of an ethylene/α-olefin copolymer or a modified ethylene/α-olefin copolymer formed by graft-copolymerization with at least one

compound selected from the unsaturated carboxylic acids and anhydrides and esters thereof, and (B) (i) 10 to 100 parts by weight of a silica type filler which has been treated with a silane compound of formula:

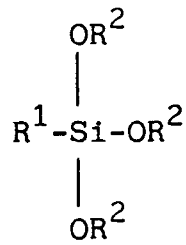

wherein $R^1$ is a chloroalkenyl or chloroalkyl group, and $R^2$ is a lower alkyl group,
or (ii) a combination of 10 to 100 parts by weight of said silane-treated silica type filler or an untreated silica type filler and 0.5 to 30 parts by weight of a polyorganosiloxane having an average composition of formula:

$(R^3)_a(R^4)_bSiO_{(4-a-b)/2}$

wherein $R^3$ is a monovalent saturated or unsaturated hydrocarbon group, $R^4$ is a chloroalkyl or alkenyl group, a is a number from 1 to 2.5 and b is a number from 0.01 to 1.2, with the proviso that the sum of a and b is from 1.8 to 3.

**2.** A composition according to claim 1, wherein the ethylene/α-olefin copolymer (A) has an intrinsic viscosity of 0.5 to 4.0 dl/g as measured in decalin at 135 °C.

**3.** A composition according to claim 1 or claim 2 wherein the ethylene/α-olefin copolymer has an ethylene/α-olefin molar ratio of from 50/50 to 95/5.

**4.** A curable composition according to any one of claims 1 to 3 wherein the ethylene/α-olefin copolymer rubber (A) contains an unconjugated polyene in an amount corresponding to an iodine value of up to 30.

**5.** A composition according to any one of claims 1 to 4 wherein the modified ethylene/α-olefin copolymer is one obtained by graft-polymerising a monomer to an ethylene/α-olefin copolymer in an amount of 0.1 to 10 parts by weight per 100 parts by weight of the ethylene/α-olefin copolymer.

**6.** A composition according to claim 5 wherein the monomer is maleic anhydride.

**7.** A rubber composition according to any one of claims 1 to 6 wherein the silane-treated silica type filler is one that is silane-treated so that the silane-treated silica type filler has a carbon content of 0.1 to 5% by weight based on the treated filler.

**8.** A composition according to any one of claims 1 to 7 wherein the silane compound is a chloropropyl-trialkoxysilane.

**9.** A composition according to any one of claims 1 to 8 wherein the silica type filler is dry method silica having a BET specific surface area of 100 to 300 $m^2/g$.

**10.** A composition according to any one of claims 1 to 9 wherein the polyorganosiloxane has a number average molecular weight of 100 to $10^6$.

**11.** A surface-treated silica-containing, heat-resistant rubber composition according to any one of claims 1 to 10 comprising as indispensable components, (A) 100 parts by weight of an ethylene/α-olefin copolymer and (B) 10 to 100 parts by weight of a silica type filler which has been treated with a silane compound of formula:

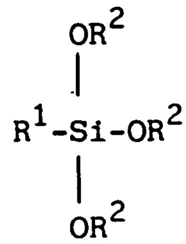

wherein $R^1$ is a chloroalkenyl or chloroalkyl group, and $R^2$ is a lower alkyl group,

**12.** A heat-resistant rubber composition according to any one of claims 1 to 10 which comprises, as indispensable component, (A) 100 parts by weight of an ethylene/α-olefin copolymer rubber, (B) 10 to 100 parts by weight of a silica type filler which has been treated with a silane compound of formula:

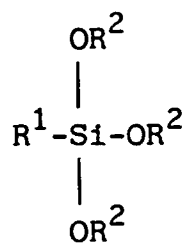

wherein $R^1$ is a chloroalkenyl or chloroalkyl group, and $R^2$ is a lower alkyl group,
and (C) 0.5 to 30 parts by weight of a polyorganosiloxane having an average composition of formula:

$(R^3)_a(R^4)_bSiO_{(4-a-b)/2}$

wherein $R^3$ is a monovalent saturated or unsaturated hydrocarbon group, $R^4$ is a chloroalkyl or alkenyl group, a is a number from 1 to 2.5 and b is a number from 0.01 to 1.2, with the proviso that the sum of a and b is from 1.8 to 3.

**13.** A modified rubber composition according to any one of claims 1 to 10 comprising, as indispensable components, 100 parts by weight of (A) a modified ethylene/α-olefin copolymer formed by graft-copolymerization with at least one compound selected from the unsaturated carboxylic acids and anhydrides and esters thereof, (B) 10 to 100 parts by weight of a silica type filler, and (C) 0.5 to 30 parts by weight of a polyorganosiloxane having an average composition of formula:

$(R^3)_a(R^4)_bSiO_{(4-a-b)/2}$

wherein $R^3$ is a monovalent saturated or unsaturated hydrocarbon group, $R^4$ is a chloroalky or alkenyl group, a is a number from 1 to 2.5 and b is a number from 0.01 to 1.2, with the proviso that the sum of a and b is from 1.8 to 3.

**14.** A modified polysiloxane-containing, heat-resistant rubber composition according to any one of claims 1 to 10 comprising, as indispensable components, (A) 100 parts by weight of an ethylene/α-olefin copolymer rubber, (B) 10 to 100 parts by weight of a silica type filler and (C) 0.5 to 30 parts by weight of a polyorganosiloxane having an average composition of formula:

$(R^3)_a(R^4)_bSiO_{(4-a-b)/2}$

wherein $R^3$ is a monovalent saturated or unsaturated hydrocarbon group, $R^4$ is a chloroalkyl or alkenyl group, a is a number from 1 to 2.5 and b is a number from 0.01 to 1.2, with the proviso that the sum of a and b is from 1.8 to 3.

**15.** A curable rubber composition according to any one of claims 1 to 10 comprising (A) 100 parts by weight of an ethylene/α-olefin copolymer or a modified ethylene/α-olefin copolymer formed by graft-copolymerization with at least one compound selected from the unsaturated carboxylic acids and anhydrides and esters thereof, (B) (1) 10 to 100 parts by weight of a silica type filler which has been treated with a silane compound of formula:

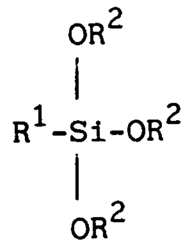

wherein $R^1$ is a chloroalkenyl or chloroalkyl group, and $R^2$ is a lower alkyl group,
or (ii) a combination of 10 to 100 parts by weight of said silane-treated silica type filler or an untreated silica type filler and 0.5 to 30 parts by weight of a polyorganosiloxane having an average composition of formula:

$(R^3)_a(R^4)_bSiO_{(4-a-b)/2}$

wherein $R^3$ is a monovalent saturated or unsaturated hydrocarbon group, $R^4$ is a chloroalkyl or alkenyl group, a is a number from 1 to 2.5 and b is a number from 0.01 to 1.2, with the proviso that the sum of a and b is from 1.8 to 3,
(C) 0.1 to 10 parts by weight of a sulphur compound as curing agent, and 0.1 to 20 parts by weight of a curing promoter, per 100 parts by weight of (A) or $3x10^{-4}$ to $5 \times 10^{-2}$ molar parts of an organic oxide as curing agent and $1x10^{-4}$ to $1x10^{-1}$ molar parts of a curing assistant per 100 parts by weight of (A).

## Patentansprüche

**1.** Hitzebeständige Gummizusammensetzung, umfassend (A) 100 Gewichtsteile eines Ethylen/α-Olefin Copolymers oder ein modifiziertes Ethylen/α-Olefin Copolymer, das durch Pfropfcopolymerisation mit mindestens einer Verbindung gebildet wird, die ausgewählt ist aus ungesättigten Carbonsäuren und deren Anhydride und Ester, und (B) (i) 10 bis 100 Gewichtsteile eines Füllstoffes vom Typ Silica der mit einer Silanverbindung der Formel

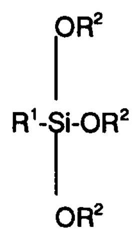

behandelt wurde, worin $R^1$ eine Chloralkenyl- oder Chloralkylgruppe bedeutet und $R^2$ eine niedere Alkylgruppe ist, oder (ii) eine Kombination von 10 bis 100 Gewichtsteilen dieses Silan behandelten Füllstoffes vom Typus Silica oder ein unbehandelter Füllstoff vom Typus Silica und 0.5 bis 30 Gewichtsteilen eines Polyorganosiloxans das eine durchschnittliche Zusammensetzung der Formel

$(R^3)_a(R^4)_bSiO_{(4-a-b)/2}$

aufweist, worin $R^3$ eine einwertige, gesättigte oder ungesättigte Kohlenwasserstoffgruppe ist, $R^4$ eine Chloralkyl- oder Alkenylgruppe ist, a eine Zahl von 1 bis 2.5 und b eine Zahl von 0.01 bis 1.2 ist, mit der Bedingung, dass die Summe von a und b von 1.8 bis 3 ist.

**2.** Zusammensetzung gemäss Anspruch 1, worin das Ethylen/α-Olefin Copolymer (A) eine Grenzviskosität von 0.5 bis 4.0 dl/g, gemessen in Dekalin bei 135 °C aufweist.

**3.** Zusammensetzung gemäss Anspruch 1 oder 2, worin das Ethylen/α-Olefin Copolymer ein Ethylen/α-Olefin Molverhältnis von 50/50 bis 95/5 hat.

**4.** Vernetzbare Zusammensetzung gemäss einem der Ansprüche 1 bis 3, worin der Ethylen/α-Olefin Copolymer Gummi (A) ein nicht konjugiertes Polyen in einer Menge enthält, die einer Jodzahl von bis zu 30 entspricht.

**5.** Zusammensetzung gemäss einem der Ansprüche 1 bis 4, worin das modifizierte Ethylen/α-Olefin Copolymer ein solches ist, das durch Pfropfpolymerisierung eines Monomers auf ein Ethylen/α-Olefin Copolymer erhalten wird, in einer Menge von 0.1 bis 10 Gewichtsteilen pro 100 Gewichtsteile des Ethylen/α-Olefin Copolymers.

**6.** Zusammensetzung gemäss Anspruch 5, worin das Monomer Maleinsäureanhydrid ist.

**7.** Gummi Zusammensetzung gemäss einem der Ansprüche 1 bis 6, worin der Silan behandette Füllstoff vom Typ Silica ein solcher ist, der derart Silan behandelt ist, dass der Silan behandelte Füllstoff vom Typ Silica einen Kohlenstoffgehalt von 0.1 bis 5 Gew.%, bezogen auf den behandelten Füllstoff, aufweist.

**8.** Zusammensetzung gemäss einem der Ansprüche 1 bis 7, worin die Silan Verbindung ein Chlorpropyltrialkoxysilan ist.

**9.** Zusammensetzung gemäss einem der Ansprüche 1 bis 8, worin der Füllstoff vom Typus Silica ein Trockenprozess Silica ist, das eine BET spezifische Oberfläche von 100 bis 300 $m^2/g$ hat.

**10.** Zusammensetzung gemäss einem der Ansprüche 1 bis 9, worin das Polyorganosiloxan ein Molekular Gewichtszahlenmittel von 100 bis $10^6$ hat.

**11.** Oberflächen behandelte Silica enthaftende, hitzebeständige Gummi Zusammensetzung gemäss einem der Ansprüche 1 bis 10, umfassend als unabkömmliche Komponenten, (A) 100 Gewichtsteile eines Ethylen/α-Olefin Copolymers und (B) 10 bis 100 Gewichtsteile eines Füllstoffes vom Typ Silica der mit einer Silanverbindung der Formel

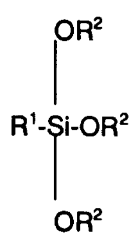

behandelt wurde, worin $R^1$ eine Chloralkenylgruppe oder Chloralkylgruppe ist, und $R^2$ eine niedere Alkylgruppe bedeutet.

**12.** Hitzebeständige Gummi Zusammensetzung gemäss einem der Ansprüche 1 bis 10, umfassend als unabkömmliche Komponente, (A) 100 Gewichtsteile eines Ethylen/α-Olefin Copolymer Gummis, (B) 10 bis 100 Gewichtsteile eines Füllstoffes vom Typus Silica der mit einer Silan Verbindung der Formel

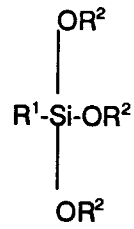

behandelt wurde, worin $R^1$ eine Chloralkenylgruppe oder Chloralkylgruppe ist, und $R^2$ eine niedere Alkylgruppe ist, und (C) 0.5 bis 30 Gewichtsteile eines Polyorganosiloxans mit einer durchschnittlichen Zusammensetzung der Formel:

$$(R^3)_a(R^4)_bSiO_{(4-a-b)/2}$$

worin $R^3$ eine einwertige, gesättigte oder ungesättigte Kohlenwasserstoffgruppe ist, $R^4$ eine Chloralkyl- oder Alkenylgruppe ist, a eine Zahl von 1 bis 2.5 und b eine Zahl von 0.01 bis 1.2 ist, mit der Bedingung, dass die Summe von a und b von 1.8 bis 3 ist.

13. Modifizierte Gummi Zusammensetzung gemäss einem der Ansprüche 1 bis 10, umfassend als unabkömmliche Komponenten, 100 Gewichtsteile (A) eines modifizierten Ethylen/$\alpha$-Olefin Copolymers das durch Pfropfcopolymerisation mit mindestens einer Verbindung gebildet wird, die ausgewählt ist aus ungesättigten Carbonsäuren und deren Anhydride und Ester, (B) 10 bis 100 Gewichtsteile eines Füllstoffes vom Typus Silica und (C) 0.5 bis 30 Gewichtsteile eines Polyorganosiloxans das eine durchschnittliche Zusammensetzung der Formel:

$$(R^3)_a(R^4)_bSiO_{(4-a-b)/2}$$

hat, worin $R^3$ eine einwertige, gesättigte oder ungesättigte Kohlenwasserstoffgruppe ist, $R^4$ eine Chloralkylgruppe oder eine Alkenylgruppe ist, a ist eine Zahl von 1 bis 2.5 und b eine Zahl von 0.01 bis 1.2 ist, mit der Bedingung, dass die Summe von a und b von 1.8 bis 3 ist.

14. Modifizierte Polysiloxan enthaltende, hitzebeständige Gummi Zusammensetzung gemäss einem der Ansprüche 1 bis 10, umfassend als unabkömmliche Komponenten, (A) 100 Gewichtsteile eines Ethylen/$\alpha$-Olefin Copolymer Gummis, (B) 10 bis 100 Gewichtsteile eines Füllstoffes vom Typus Silica und (C) 0.5 bis 30 Gewichtsteile eines Polyorganosiloxans das eine durchschnittliche Zusammensetzung der Formel:

$$(R^3)_a(R^4)_bSiO_{(4-a-b)/2}$$

hat, worin $R^3$ eine einwertige, gesättigte oder ungesättigte Kohlenwasserstoffgruppe ist, $R^4$ eine Chloralkyl- oder Alkenylgruppe ist, a eine Zahl von 1 bis 2.5 und b eine Zahl von 0.01 bis 1.2 ist, mit der Bedingung, dass die Summe von a und b von 1.8 bis 3 ist.

15. Vernetzbare Gummi Zusammensetzung gemäss einem der Ansprüche 1 bis 10, umfassend (A) 100 Gewichtsteile eines Ethylen/$\alpha$-Olefin Copolymers oder eines modifizierten Ethylen/$\alpha$-Olefin Copolymers das durch Pfropfcopolymerisation mit mindestens einer Verbindung gebildet wird, die ausgewählt ist, aus ungesättigten Carbonsäuren und deren Anhydride und Ester und (B) (i) 10 bis 100 Gewichtsteile eines Füllstoffes vom Typus Silica der mit einer Silan Verbindung der Formel

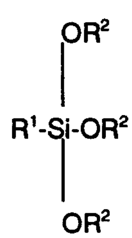

behandelt wurde, worin $R^1$ eine Chloralkenyl- oder Chloralkylgruppe bedeutet, und $R^2$ eine niedere Alkylgruppe ist, oder (ii) eine Kombination von 10 bis 100 Gewichtsteilen dieses Silan behandelten Füllstoffes vom Typus Silica oder ein unbehandelter Füllstoff vom Typus Silica und 0.5 bis 30 Gewichtsteile eines Polyorganosiloxans, das eine durchschnittliche Zusammensetzung der Formel

$(R^3)_a(R^4)_bSiO_{(4-a-b)/2}$

aufweist, worin $R^3$ eine einwertige, gesättigte oder ungesättigte Kohlenwasserstoffgruppe ist, $R^4$ eine Chloralkyl- oder Alkenylgruppe ist, a eine Zahl von 1 bis 2.5 und b eine Zahl von 0.01 bis 1.2 ist, mit der Bedingung, dass die Summe von a und b von 1.8 bis 3 ist, (C) 0.1 bis 10 Gewichtsteile einer Schwefel Verbindung als Vernetzungsmittel und 0.1 bis 20 Gewichtsteile eines Vernetzungsbeschleunigers pro 100 Gewichtsteile von (A) oder $3x10^{-4}$ bis $5x10^{-2}$ Molteile eines organischen Oxides als Vernetzungsmittel, und $1x10^{-4}$ bis $1x10^{-1}$ Molteile einer Vernetzungshilfe pro 100 Gewichtsteile von (A).

## Revendications

1. Composition de caoutchouc résistant à la chaleur, comprenant (A) 100 parties en poids d'un copolymère éthylène/α-oléfine ou d'un copolymère éthylène/α-oléfine modifié formé par copolymérisation par greffage avec au moins un composé choisi dans le groupe formé par les acides carboxyliques insaturés, les anhydrides et les esters de ces acides, et (B) (i) de 10 à 100 parties en poids d'une charge du type silice, traitée avec un composé silane de formule :

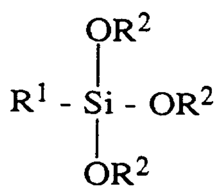

dans laquelle $R^1$ désigne un groupe chloroalcényle ou chloroalkyle, et $R^2$ désigne un groupe alkyle inférieur,
ou (ii) une combinaison de 10 à 100 parties en poids de ladite charge du type silice, traitée avec une silane ou une charge du type silice, non traitée et de 0,5 à 30 parties en poids d'un polyorganosiloxane ayant une composition moyenne de formule :

$(R^3)_a(R^4)_bSiO_{(4-a-b)/2}$

dans laquelle $R^3$ désigne un groupe hydrocarboné monovalent, saturé ou insaturé, $R^4$ désigne un groupe chloroalkyle ou chloroalcényle, a est un nombre de 1 à 2,5 et b est un nombre de 0,01 à 1,2, sous réserve que la somme de a et de b soit de 1,8 à 3.

2. Composition selon la revendication 1, dans laquelle le copolymère (A) éthylène/α-oléfine a une viscosité intrinsèque de 0,5 à 4,0 dl/g, mesurée dans la décaline à 135 °C.

3. Composition selon la revendication 1 ou 2, dans laquelle le copolymère éthylène/α-oléfine a un rapport molaire éthylène/α-oléfine de 50/50 à 95/5.

4. Composition durcissable selon l'une quelconque des revendications 1 à 3, dans laquelle le caoutchouc copolymère éthylène/α-oléfine (A) contient un polyène non conjugué, en une quantité correspondant à un indice de iode allant jusqu'à 30.

5. Composition selon l'une quelconque des revendications 1 à 4, dans laquelle le copolymère éthylène/α-oléfine est obtenu par copolymérisation par greffage d'un monomère sur un copolymère éthylène/α-oléfine, en un quantité de 0,1 à 10 parties en poids pour 100 parties en poids de copolymère éthylène/α-oléfine.

**6.** Composition selon la revendication 5, dans laquelle le monomère est l'anhydride maléique.

**7.** Composition de caoutchouc selon l'une quelconque des revendications 1 à 6, dans laquelle la charge du type silice, traitée par une silane, est traitée par une silane de telle manière que cette charge ait une teneur en carbone de 0,1 à 5% en poids calculée sur le poids de la charge traitée.

**8.** Composition selon l'une quelconque des revendications 1 à 7, dans laquelle le composé silane est un chloropropyltrialcoxysilane.

**9.** Composition selon l'une des revendications 1 à 8, dans laquelle la charge du type silice est une silice, préparée par un procédé par voie sèche, ayant une surface spécifique BET de 100 à 300 $m^2/g$.

**10.** Composition selon l'une quelconque des revendications 1 à 9, dans laquelle le polyorganosiloxane a un poids moléculaire moyen en nombre de 100 à $10^6$.

**11.** Composition de caoutchouc résistant à la chaleur, contenant de la silice, ayant subi un traitement de surface, selon l'une quelconque des revendications 1 à 10, comprenant en tant que constituant indispensable, (A) 100 parties en poids d'un copolymère éthylène/α-oléfine et (B) de 10 à 100 parties en poids d'une charge du type silice, ayant été traitée avec un composé silane de formule :

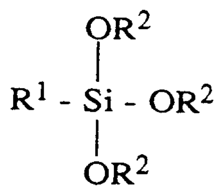

dans laquelle $R^1$ désigne un groupe chloroalcényle ou chloroalkyle, et $R^2$ désigne un groupe alkyle inférieur.

**12.** Composition de caoutchouc résistant à la chaleur, selon l'une quelconque des revendications 1 à 10, comprenant en tant que composant indispensable (A) 100 parties en poids d'un copolymère éthylène/α-oléfine et (B) de 10 à 100 parties en poids d'une charge du type silice qui a été traitée avec un composé silane de formule :

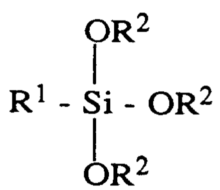

dans laquelle $R^1$ désigne un groupe chloroalcényle ou chloroalkyle, et $R^2$ désigne un groupe alkyle inférieur,
et (C) de 0,5 à 30 parties en poids d'un polyorganosiloxane ayant une composition moyenne de formule :

$(R^3)_a(R^4)_bSiO_{(4-a-b)/2}$

dans laquelle $R^3$ désigne un groupe hydrocarboné monovalent, saturé ou insaturé, $R^4$ désigne un groupe chloroalkyle ou alcényle, a est un nombre de 1 à 2,5 et b est un nombre de 0,01 à 1,2, sous réserve que la somme de a et de b soit de 1,8 à 3.

**13.** Composition de caoutchouc modifié, selon l'une quelconque des revendications 1 à 10, comprenant, en tant que composant indispensable (A) 100 parties en poids d'un copolymère éthylène/α-oléfine modifié formé par copolymérisation par greffage avec au moins un composé choisi dans le groupe formé par les acides carboxyliques insaturés, leurs anhydrides et leurs esters, (B) de 10 à 100 parties en poids

d'une charge du type silice, et (C) de 0,5 à 30 parties en poids d'un polyorganosiloxane ayant une composition moyenne de formule :

$(R^3)_a(R^4)_bSiO_{(4-a-b)/2}$

dans laquelle $R^3$ désigne un groupe hydrocarboné monovalent, saturé ou insaturé, $R^4$ désigne un groupe chloroalkyle ou alcényle, a est un nombre de 1 à 2,5 et b est un nombre de 0,01 à 1,2, sous réserve que la somme de a et de b soit de 1,8 à 3.

**14.** Composition de caoutchouc résistant à la chaleur, contenant un polysiloxane modifié, selon l'une quelconque des revendications 1 à 10, comprenant en tant que composant indispensable (A) 100 parties en poids d'un caoutchouc copolymère éthylène/α-oléfine, (B) de 10 à 100 parties en poids d'une charge de type silice et (C) de 0,5 à 30 parties en poids d'un polyorganosiloxane ayant une composition moyenne répondant à la formule :

$(R^3)_a(R^4)_bSiO_{(4-a-b)/2}$

dans laquelle $R^3$ désigne un groupe hydrocarboné monovalent, saturé ou insaturé, $R^4$ désigne un groupe chloroalkyle ou alcényle, a est un nombre de 1 à 2,5 et b est un nombre de 0,01 à 1,2, sous réserve que la somme de a et de b soit de 1,8 à 3.

**15.** Composition de caoutchouc durcissable, selon l'une quelconque des revendications 1 à 10, comprenant (A) 100 parties en poids d'un copolymère éthylène/α-oléfine ou d'un copolymère éthylène/α-oléfine modifié, formé par copolymérisation par greffage avec au moins un composé choisi dans le groupe formé par des acides carboxyliques insaturés, leurs anhydrides et leurs esters, (B) (i) de 10 à 100 parties en poids d'une charge de type silice qui a été traitée avec un composé silane de formule :

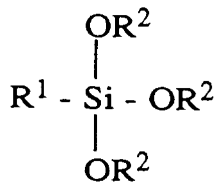

dans laquelle $R^1$ désigne un groupe chloroalcényle ou chloroalkyle, et $R^2$ désigne un groupe alkyle inférieur,
ou (ii) une combinaison de 10 à 100 parties en poids d'une charge du type silice, traitée avec une silane ou une charge du type silice non traitée et de 0,5 à 30 parties en poids d'un polyorganosiloxane ayant une composition moyenne de formule :

$(R^3)_a(R^4)_bSiO_{(4-a-b)/2}$

dans laquelle $R^3$ désigne un groupe hydrocarboné monovalent, saturé ou insaturé, $R^4$ désigne un groupe chloroalkyle ou alcényle, a est un nombre de 1 à 2,5 et b est un nombre de 0,01 à 1,2, sous réserve que la somme de a et de b soit de 1,8 à 3,
(C) de 0,1 à 10 parties en poids d'un composé soufré en tant qu'agent de durcissement, et de 0,1 à 20 parties en poids d'un promoteur de durcissement pour 100 parties en poids de (A) ou de $3x10^{-4}$ à $5x10^{-2}$ parties molaires d'un oxyde organique en tant qu'agent de durcissement et de $1x10^{-4}$ à $1x10^{-1}$ parties molaires d'un aide ou d'un auxiliaire de durcissement pour 100 parties en poids de (A).